# EUROPEAN PATENT APPLICATION

(11) **EP 2 257 089 A1**
(43) Date of publication of application: **01.12.2010**
(21) Application number: 09721692.3
(22) Date of filing: 10.02.2009
(51) Int. Cl.: H04W 4/02, G01C 21/00, G08G 1/005, G08G 1/09, G08G 1/0969, H04M 11/00, H04W 64/00

(54) **NETWORK SYSTEM AND MOBILE COMMUNICATION TERMINAL**

(30) Priority: 19.03.2008 JP 2008071838
(71) Applicant: Sharp Kabushiki Kaisha, Osaka-shi, Osaka 545-8522 (JP)
(72) Inventor: TAKAGI, Fumihiko, Osaka 545-8522 (JP); MARUYAMA, Kuniyuki, Osaka 545-8522 (JP)
(74) Representative: Treeby, Philip David William
(86) International application number: PCT/JP2009/052212
(87) International publication number: WO 2009/116331

(57) **Abstract**

A mobile communication terminal (100) includes a location information acquisition unit (102-1) acquiring first current location information representing a current location of the mobile communication terminal, an operation unit (110) accepting input of destination information, a transmission and reception unit (101-1) transmitting the first current location information and the destination information to another mobile communication terminal (200) and receiving from the other mobile communication terminal second current location information representing a current location of the other mobile communication terminal, a display unit (107-1) displaying an image, and a control unit (106-1) causing the display unit to display the current location of the mobile communication terminal, the current location of the other mobile communication terminal, and the destination on a map, based on the first current location information, the second current location information, and the destination information.

## Description

### TECHNICAL FIELD

The present invention relates to a network system including a plurality of mobile communication terminals connectable to each other via a network, and mobile communication terminals constituting the network, and particularly to a network system including a plurality of mobile communication terminals each capable of acquiring its current location, and mobile communication terminals constituting the network system.

### BACKGROUND ART

Conventionally, mobile phones and car navigation devices each having a capability of acquiring its current location, such as the GPS (Global Positioning System) capability of identifying the current location from radio waves for use in positioning that are received from GPS satellites, for example, have been developed. Mobile phones capable of communicating data with each other via the Internet have also been developed. Some of such mobile phones can transmit information about the own current location to another mobile phone.

Japanese Patent Laying-Open No. 8-5394 (Patent Document 1) for example discloses a mobile terminal device calculating the current location from radio waves from GPS satellites and transmitting it to another mobile terminal device. The mobile terminal device displays the location information sent from the other mobile communication device on a map. Each mobile terminal device therefore includes map data storage means for storing map data, map display means for displaying map data managed by the map data storage means, location detection means for detecting a current location, transmission means for transmitting the location detected by the location detection means to another mobile terminal device, reception means for receiving the location transmitted from another mobile terminal device, and location display means for displaying a mark at the location received by the reception means on the map data displayed by the map display means.

Further, Japanese Patent Laying-Open No. 6-20197 (Patent Document 2) discloses a map data display device. When an operator's desired facility is not present on a map displayed by display means, software in a ROM that searches for additional information is driven to search for the desired facility located around the map displayed by the display means. The result of search is presented by graphic drawing means that draws on the map marks indicating how many facilities are present in which direction around the map of the display means.
Patent Document 1: Japanese Patent Laying-Open No. 8-5394
Patent Document 2: Japanese Patent Laying-Open No. 6-20197

### DISCLOSURE OF THE INVENTION

### PROBLEMS TO BE SOLVED BY THE INVENTION

While the mobile terminal device disclosed in Japanese Patent Laying-Open No. 8-5394 (Patent Document 1) can confirm the relative location relationship between itself and another terminal, it cannot confirm the location relationship between itself and a destination, the location relationship between the destination and another terminal, and the like. For example, a user of the terminal cannot easily know how long it takes for a user of another terminal to reach the destination.

As for the map data display device disclosed in Japanese Patent Laying-Open No. 6-20197 (Patent Document 2), a user of a terminal cannot know the location relationship between the terminal and another terminal, the location relationship between a destination and another terminal, and the like.

The present invention has been made to solve such problems as described above, and a chief object of the present invention is to provide a network system that enables a user of a mobile communication terminal to easily know the location relationship between the current location of the mobile communication terminal, the current location of another mobile communication terminal, and the destination, as well as mobile communication terminals constituting the network.

### MEANS FOR SOLVING THE PROBLEMS

According to an aspect of the present invention, a network system including at least first and second mobile communication terminals connectable to each other via a network is provided. The first mobile communication terminal includes: a first location information acquisition unit acquiring first current location information representing a current location of the first mobile communication terminal; a first storage unit storing in advance second identification information for identifying the second mobile communication terminal; a first operation unit accepting input of destination information representing a destination; and a first transmission and reception unit transmitting the first current location information and the destination information via the network to the second mobile communication terminal, based on the second identification information. The second mobile communication terminal includes: a second location information acquisition unit acquiring second current location information representing a current location of the second mobile communication terminal; a second display unit; a second storage unit storing map information in advance; and a second control unit causing, based on the first current location information, the second current location information, and the destination information and with reference to the map information, the second display unit to display respective current locations of the first and second mobile communication terminals and the destination simultaneously on a map.

Preferably, the second storage unit further stores in advance first identification information for identifying the first mobile communication terminal. The second mobile communication terminal further includes a second transmission and reception unit transmitting the second current location information via the network to the first mobile communication terminal, based on the first identification information. The first storage unit further stores map information in advance. The first mobile communication terminal further includes: a first display unit; and a first control unit causing, based on the first current location information, the second current location information, and the destination information and with reference to the map information, the first display unit to display respective current locations of the first and second mobile communication terminals and the destination simultaneously on a map.

Preferably, the first transmission and reception unit transmits information about an image displayed by the first display unit to the second mobile communication terminal. The second display unit displays the image based on the information about the image that is transmitted from the first mobile communication terminal.

Preferably, the first mobile communication terminal further includes a first touch panel including the first display unit and the first operation unit. The first transmission and reception unit transmits information about an image input via the touch panel to the second mobile communication terminal. The second display unit displays the image based on the information about the image input via the touch panel that is transmitted from the first mobile communication terminal.

Preferably, the network system further includes a third mobile communication terminal, the third mobile communication terminal and the first mobile communication terminal being connectable to each other via the network. The first storage unit further stores in advance third identification information for identifying the third mobile communication terminal. The first transmission and reception unit further transmits the first current location information and the destination information via the network to the third mobile communication terminal, based on the third identification information. The third mobile communication terminal includes: a third location information acquisition unit acquiring third current location information representing a current location of the third mobile communication terminal; a third display unit; a third storage unit storing map information in advance; and a third control unit causing, based on the first current location information, the second current location information, the third current location information, and the destination information and with reference to the map information, the third display unit to display respective current locations of the first to third mobile communication terminals and the destination simultaneously on a map.

Preferably, the network system further includes a third mobile communication terminal, the third mobile communication terminal and the first and second mobile communication terminals being connectable to each other via the network. The second storage unit stores in advance third identification information for identifying the third mobile communication terminal. The second mobile communication terminal further includes a second transmission and reception unit transmitting the first current location information, the second current location information, and the destination information via the network to the third mobile communication terminal, based on the third identification information. The third mobile communication terminal includes: a third location information acquisition unit acquiring third current location information representing a current location of the third mobile communication terminal; a third display unit; a third storage unit storing in advance map information and first identification information for identifying the first mobile communication terminal; a third control unit causing, based on the first current location information, the second current location information, the third current location information, and the destination information and with reference to the map information, the third display unit to display respective current locations of the first to third mobile communication terminals and the destination simultaneously on a map; and a third transmission and reception unit transmitting the second current location information and the third current location information via the network to the first mobile communication terminal, based on the first identification information. The first storage unit further stores map information in advance. The first transmission and reception unit further transmits the third current location information via the network to the second mobile communication terminal, based on the second identification information. The second control unit further causes the second display unit to display the current location of the third mobile communication terminal, based on the third current location information. The first mobile communication terminal further includes: a first display unit; and a first control unit causing, based on the first current location information, the second current location information, the third current location information, and the destination information and with reference to the map information, the first display unit to display respective current locations of the first to third mobile communication terminals and the destination simultaneously on a map.

Preferably, the second storage unit stores map information that can be displayed in a plurality of forms. The second control unit includes: a calculation unit calculating, based on the second current location information and the destination information, a distance from the current location to the destination; a determination unit determining a display form of map based on the distance; and a display control unit causing the second display unit to display the map in the display form determined by the determination unit and to display the respective current locations of the mobile communication terminals and the destination simultaneously on the map.

Preferably, the current location information includes a type of a corresponding mobile communication terminal. The determination unit determines a display form of map, based on the type of the second mobile communication terminal and the type of the other mobile communication terminal.

Preferably, the second storage unit stores map information that can be displayed in a plurality of forms. The second control unit includes: a calculation unit calculating, based on the first current location information, the second current location information, and the destination information, respective distances from respective current locations of the mobile communication terminals to the destination; a determination unit determining a display form of map based on a largest distance among the distances; and a display control unit causing the second display unit to display the map in the display form determined by the determination unit and to display respective current locations of the mobile communication terminals and the destination simultaneously on the map.

Preferably, the destination information includes information about time for meeting. The first operation unit accepts input further including information about time for meeting.

According to another aspect of the present invention, a mobile communication terminal connectable with at least one another mobile communication terminal each other via a network is provided. The mobile communication terminal includes: a display unit; a location information acquisition unit acquiring first current location information representing a current location of the mobile communication terminal; a storage unit storing in advance map information and identification information for identifying that another mobile communication terminal; an operation unit accepting input of destination information representing a destination; a transmission and reception unit transmitting the first current location information and the destination information via the network to that another mobile communication terminal, based on the identification information, and receiving second current location information representing a current location of that another mobile communication terminal from that another mobile communication terminal; and a control unit causing, based on the first current location information, the second current location information, and the destination information and with reference to the map information, the display unit to display the current location of the mobile communication terminal, the current location of that another mobile communication terminal, and the destination simultaneously on a map.

Preferably, the storage unit stores map information that can be displayed in a plurality of forms. The control unit includes: a calculation unit calculating, based on the first current location information and the destination information, a distance from the current location to the destination; a determination unit determining a display form of map based on the distance; and a display control unit causing the display unit to display the map in the display form determined by the determination unit and to display respective current locations of the mobile communication terminals and the destination simultaneously on the map.

Preferably, the first current location information includes a type of the mobile communication terminal. The second current location information includes a type of that another mobile communication terminal. The determination unit determines a display form of map, based on the type of the mobile communication terminal and the type of that another mobile communication terminal.

Preferably, the storage unit stores map information that can be displayed in a plurality of forms. The control unit includes: a calculation unit calculating, based on the first current location information, the second current location information, and the destination information, respective distances from respective current locations of the mobile communication terminals to the destination; a determination unit determining a display form of map based on a largest distance among the distances; and a display control unit causing the display unit to display the map in the display form determined by the determination unit and to display respective current locations of the mobile communication terminals and the destination simultaneously on the map.

Preferably, the transmission and reception unit transmits information about an image displayed by the display unit to that another mobile communication terminal. Based on information about an image transmitted from that another mobile communication terminal, the display unit displays the image.

Preferably, the destination information further includes information about time for meeting. The operation unit accepts input further including information about time for meeting.

According to still another aspect of the present invention, a communication method for a mobile communication terminal connectable with at least one another mobile communication terminal each other via a network is provided. The mobile communication terminal includes: a display unit; an operation unit; a processor unit; a location information acquisition unit acquiring first current location information representing a current location of the mobile communication terminal; and a storage unit storing in advance map information and identification information for identifying that another mobile communication terminal. The communication method includes the steps of: accepting input of destination information representing a destination; transmitting the first current location information and the destination information via the network to that another mobile communication terminal, based on the identification information; receiving from that another mobile communication terminal second current location information representing a current location of that another mobile communication terminal; and causing, based on the first current location information, the second current location information, and the destination information and with reference to the map information, the display unit to display the current location of the mobile communication terminal, the current location of that another mobile communication terminal, and the destination simultaneously on a map.

Preferably, the storage unit stores map information that can be displayed in a plurality of forms. The step of causing the display unit to display the current locations and the destination includes the steps of: calculating, based on the first current location information and the destination information, a distance from the current location to the destination; determining a display form of map based on the distance; and causing the display unit to display the map in the display form determined by the determination unit and to display respective current locations of the mobile communication terminals and the destination simultaneously on the map.

Preferably, the first current location information includes a type of the mobile communication terminal. The second current location information includes a type of that another mobile communication terminal. The step of determining includes the step of determining a display form of map based on the type of the mobile communication terminal and the type of that another mobile communication terminal.

Preferably, the storage unit stores map information that can be displayed in a plurality of forms. The step of causing the display unit to display the current locations and the destination includes the steps of: calculating, based on the first current location information, the second current location information, and the destination information, respective distances from respective current locations of the mobile communication terminals to the destination; determining a display form of map based on a largest distance among the distances; and causing the display unit to display the map in the display form determined by the determination unit and to display respective current locations of the mobile communication terminals and the destination simultaneously on the map.

### EFFECTS OF THE INVENTION

As seen from above, the network system or mobile communication terminal according to the present invention enables a user of the mobile communication terminal to easily know the location relationship between the current location of the mobile communication terminal itself, the current location of another mobile communication terminal, and the destination.

### BRIEF DESCRIPTION OF THE DRAWINGS

Fig. 1 is a schematic diagram showing an example of a network system in the present embodiment.
Fig. 2 is a sequence diagram showing a general operation in the network system.
Fig. 3 is a block diagram showing a hardware configuration of a mobile phone in the present embodiment.
Fig. 4 is a block diagram showing a hardware configuration of a car navigation device in the present embodiment.
Fig. 5 is a block diagram showing a hardware configuration of a matching server in the present embodiment.
Fig. 6 is an image diagram showing a data structure of a mail-IP address translation table stored in a memory or fixed disk of the matching server.
Fig. 7 is a block diagram showing a functional configuration of each mobile communication terminal in the present embodiment.
Fig. 8 is an image diagram showing a data structure of a first file stored in a storage unit.
Fig. 9 is an image diagram showing a data structure of a second file stored in the storage unit.
Fig. 10 is an image diagram showing a data structure of a third file stored in the storage unit.
Fig. 11A is an image diagram showing a data structure of a fourth file stored in the storage unit.
Fig. 11B is an image diagram showing a data structure of a fifth file stored in the storage unit.
Fig. 12A is an image diagram showing a data structure of a sixth file stored in the storage unit.
Fig. 12B is an image diagram showing a data structure of a seventh file stored in the storage unit.
Fig. 13 is an image diagram showing a state where image data is shared by mobile communication terminals.
Fig. 14 is an image diagram showing a flow of data when a mobile communication terminal transmits destination information.
Fig. 15A is a first image diagram showing a flow of data when each mobile communication terminal transmits its current location information.
Fig. 15B is a second image diagram showing a flow of data when each mobile communication terminal transmits its current location information.
Fig. 15C is a third image diagram showing a flow of data when each mobile communication terminal transmits its current location information.
Fig. 16 is a flowchart showing a procedure followed by a mobile phone in a first embodiment for current location display processing of displaying its current location.
Fig. 17 is an image diagram showing a state where a display unit of the mobile phone displays a current location of the mobile phone itself on a map of a large scale showing a destination and therearound.
Fig. 18 is an image diagram showing a state where the display unit of the mobile phone displays a current location of the mobile phone itself on a route map of a small scale.
Fig. 19 is a flowchart showing a procedure followed by the mobile phone in the first embodiment for current location display processing of displaying a current location of another terminal.
Fig. 20 is an image diagram showing a state where the display unit of the mobile phone displays a current location of another terminal on a route map of a small scale.
Fig. 21 is an image diagram showing a state where the display unit of the mobile phone displays a current location of another terminal on a residential map of a large scale.
Fig. 22 is a flowchart showing a procedure followed by a car navigation device in the first embodiment for current location display processing of displaying its current location.
Fig. 23 is an image diagram showing a state where a display unit of the car navigation device displays its current location on a map of a large scale showing a destination and therearound.
Fig. 24 is an image diagram showing a state where the display unit of the car navigation device displays its current location on a road map of a small scale.
Fig. 25 is a flowchart showing a procedure followed by the car navigation device in the first embodiment for current location display processing of displaying a current location of another terminal.
Fig. 26 is an image diagram showing a state where a display unit of a car navigation device displays a current location of another terminal on a road map.
Fig. 27 is an image diagram showing a state where the display unit of the car navigation device displays a current location of another terminal on a residential map.
Fig. 28 is an image diagram showing a flow of data when each mobile communication terminal in a second embodiment transmits its current location information.
Fig. 29 is a flowchart showing a procedure followed by a mobile phone in the second embodiment for current location display processing of displaying its current location.
Fig. 30 is a flowchart showing a procedure followed by the mobile phone in the second embodiment for current location display processing of displaying a current location of another terminal.
Fig. 31 is a flowchart showing a procedure followed by a car navigation device in the second embodiment for current location display processing of displaying its current location.
Fig. 32 is a flowchart showing a procedure followed by the car navigation device in the second embodiment for current location display processing of displaying a current location of another terminal.

### DESCRIPTION OF THE REFERENCE SIGNS

1, 1b network system; 100, 100A, 100B mobile phone; 101 radio communication unit; 101-1 transmission and reception unit; 102 GPS signal processing unit; 102-1 location acquisition unit; 103 RAM; 103-1 storage unit; 105 battery; 106 CPU; 106-1 control unit; 106-1 calculation unit; 106-2 determination unit; 106-3 display control unit; 107 monitor; 107-1 display unit; 108 microphone; 109 speaker; 110 operation unit; 111 communication antenna; 112 positioning antenna; 200 car navigation device; 201 radio communication unit; 202 GPS signal processing unit; 205 battery; 207 liquid crystal display; 208 transmission and reception unit; 210 touch panel; 211 communication antenna; 212 positioning antenna; 250 automobile; 400 matching server; 406 memory; 406-1 address translation table; 407 fixed disk; 408 internal bus; 409 communication interface; 500 Internet network; 600 relay server; 700 carrier network; X current location; Y current location; Z destination

### BEST MODES FOR CARRYING OUT THE INVENTION

Embodiments of the present invention will hereinafter be described based on the drawings. In the following description, the same components are denoted by the same reference characters and, where the components are identical to each other in terms of name and/or capability, a detailed description of the components will not be repeated.

Further, in the following, a mobile phone 100, a car navigation device (satellite navigation system) 200, and a PND (Personal Navigation Device) 300 will be described as exemplary examples of "mobile communication terminal". Here, mobile phone 100, car navigation device 200, and PND 300 have a capability for acquiring the current location of the mobile communication terminal, typically such as the GPS capability for example, and a storage unit storing map data, and can display on a map the current location of the mobile communication terminal itself by means of a display unit.

Furthermore, in the following, where a description will be given of a configuration or capability common to mobile phone 100, car navigation device 200, and PND 300, mobile phone 100, car navigation device 200, and PND 300 each will also be referred to generically as "mobile communication terminal". It should be noted that "mobile communication terminal" is also applicable to other mobile information devices such as PDA (Personal Data Assistance) and the like.

### [First Embodiment]

### <Entire Configuration of Network System 1>

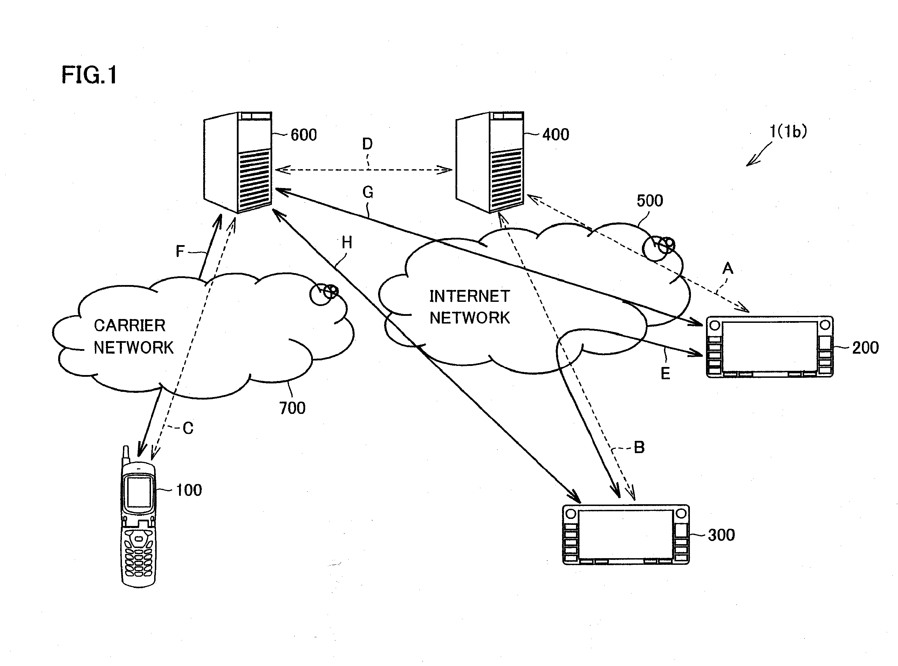

A first embodiment of a network system 1 will be described first. Fig. 1 is a schematic diagram showing an example of network system 1 in the present embodiment. As shown in Fig. 1, network system 1 includes a mobile phone 100, a car navigation device 200, a PND 300, a matching server 400, a relay server 600, an Internet network 500, and a carrier network 700.

Mobile phone 100 is configured to be connectable to carrier network 700. Car navigation device 200 is configured to be connectable to Internet network 500. PND 300 is configured to be connectable to Internet network 500. Matching server 400 is configured to be connectable to Internet network 500. Relay server 600 is configured to be connectable to Internet network 500 and carrier network 700.

Mobile phone 100 is connectable to car navigation device 200 and PND 300 via carrier network 700, relay server 600, and Internet network 500. Car navigation device 200 is connectable to mobile phone 100 via Internet network 500, relay server 600, and carrier network 700, and connectable to PND 300 via Internet network 500. PND 300 is connectable to mobile phone 100 via Internet network 500, relay server 600, and carrier network 700, and connectable to car navigation device 200 via Internet network 500.

To mobile phone 100, car navigation device 200, and PND 300 each, identification information (such as mail address, IP address (Internet Protocol address), MAC address (Media Access Control address), and nickname for example) is allocated for identifying the terminal itself. Mobile phone 100, car navigation device 200, and PND 300 each can store, in an internal storage unit, identification information of another mobile communication terminal and, based on the identification information, can communicate with the other mobile communication terminal via carrier network 700 and Internet network 500 for example.

Car navigation device 200 and PND 300 in the present embodiment each communicate with another mobile communication terminal by means of DHCP (Dynamic Host Configuration Protocol). Namely, car navigation device 200 and PND 300 in the present embodiment generally use an IP address dynamically allocated by the DHCP to transmit and receive data to and from another mobile communication terminal. Here, matching server 400 has already allocated respective IP addresses to the terminals. Since details of the process of allocating the IP addresses are well known, the description will not be repeated here.

Mobile phone 100, car navigation device 200, and PND 300 in the present embodiment use respective allocated IP addresses to directly transmit and receive data to and from each other via the network. Namely, mobile phone 100, car navigation device 200, and PND 300 included in network system 1 of the present embodiment constitute a so-called P2P (Pear to Pear) type network.

### <General Operation of Network System 1>

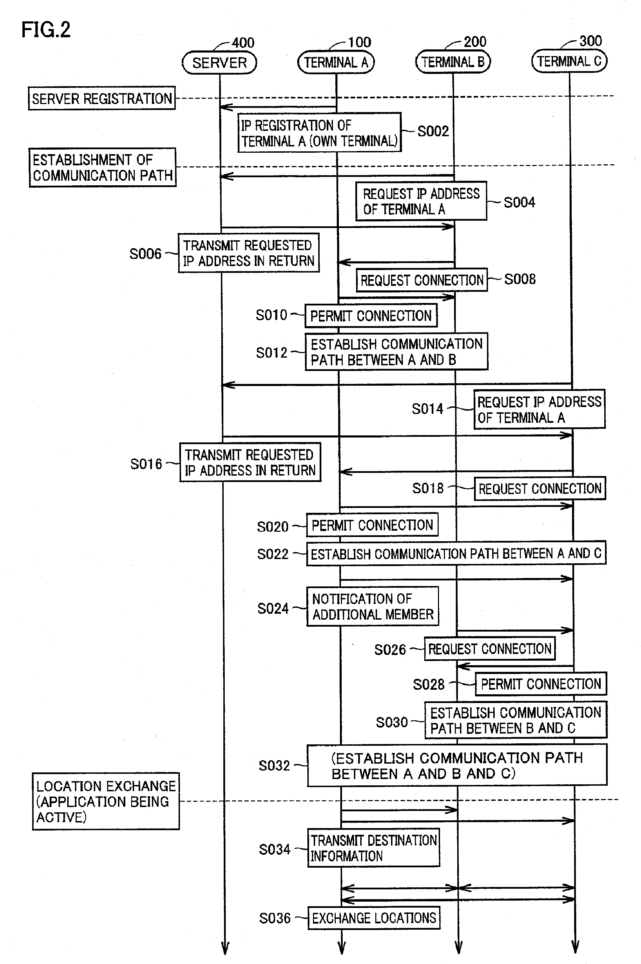

Here, a description will be given of a general operation of network system 1 in the present embodiment. Fig. 2 is a sequence diagram showing the general operation in network system 1. As shown in Figs. 1 and 2, mobile communication terminals in the present embodiment are required to first exchange (acquire) respective IP addresses with each other for performing the P2P type data transmission and reception to and from each other. After acquiring the IP address, each mobile communication terminal transmits the terminal's own current location information and destination information for example to another mobile communication terminal through the P2P type data transmission and reception. In this way, each mobile communication terminal can simultaneously display the terminal's own current location, the current location of another mobile communication terminal, and the destination.

First, mobile phone 100 (terminal A in Fig. 2) makes a request to matching server 400 for IP registration (log-in) (step S002). More specifically, mobile phone 100 transmits a mail address and the IP address of mobile phone 100 to matching server 400 via carrier network 700, relay server 600, and Internet network 500. Matching server 400 stores the mail address of mobile phone 100 and the IP address thereof in such a manner that the mail address and the IP address are associated with each other, and thereby accepts log-in of mobile phone 100.

At this time, car navigation device 200 (terminal B in Fig. 2) and PND 300 (terminal C in Fig. 2) have not registered respective IPs at matching server 400. Therefore, even if mobile phone 100 requests matching server 400 to provide the IP address of car navigation device 200 or PND 300 based on a mail address, nickname or the like of car navigation device 200 or PND 300 that is stored in mobile phone 100, matching server 400 does not provide in return the IP address of car navigation device 200 or PND 300.

After this, car navigation device 200 newly makes a request to matching server 400 for IP registration via Internet network 500 (step S004). Matching server 400 associates a mail address of car navigation device 200 with the IP address thereof and stores them.

At the same time, car navigation device 200 requests matching server 400 to provide the IP address of mobile phone 100, based on the mail address of mobile phone 100. Matching server 400 transmits to car navigation device 200 the IP address of mobile phone 100 for which IP registration has been completed (step S006). Car navigation device 200 acquires the IP address of mobile phone 100 from matching server 400, and makes a request to mobile phone 100 for connection via Internet network 500, relay server 600, and carrier network 700 (step S008). Mobile phone 100 permits the connection (step S010), and accordingly connection between mobile phone 100 and car navigation device 200 is established (step S012).

At this time, PND 300 has not registered its IP at matching server 400. Therefore, even if car navigation device 200 requests matching server 400 to provide the IP address of PND 300 based on a mail address of PND 300, matching server 400 does not provide in return the IP address of PND 300.

After this, PND 300 newly makes a request to matching server 400 for IP registration via Internet network 500 (step S014). Matching server 400 associates the mail address of PND 300 with the IP address of PND 300 and stores them.

At the same time, PND 300 requests matching server 400 via Internet network 500 to provide respective IP addresses of mobile phone 100 and car navigation device 200, based on respective mail addresses of mobile phone 100 and car navigation device 200. Matching server 400 transmits to PND 300 respective IP addresses of mobile phone 100 and car navigation device 200 with their IP registration having been completed (step S016). PND 300 having acquired respective IP addresses of mobile phone 100 and car navigation device 200 from matching server 400 then makes a request to mobile phone 100 for connection, via carrier network 700, relay server 600, and Internet network 500 (step S018). Mobile phone 100 permits the connection (step S020), and accordingly connection between PND 300 and mobile phone 100 is established (step S022).

Mobile phone 100 transmits to car navigation device 200 via carrier network 700, relay server 600, and Internet network 500, a notification that a member is added (step S024). Car navigation device 200 accepts the notification. Based on the notification, car navigation device 200 makes a request to PND 300 for connection, via Internet network 500 (step S026). PND 300 permits the connection (step S028), and accordingly connection between PND 300 and car navigation device 200 is established (step S030).

In this way, direct interconnection between mobile phone 100, car navigation device 200, and PND 300 is established (step S032). It should be noted that, in steps S024 to S030, PND 300 may make a request to car navigation device 200 for connection in a manner similar to that in which car navigation device 200 establishes connection with mobile phone 100.

Particularly, in the present embodiment, when a user of mobile phone 100 enters a place for meeting (destination), time for meeting and the like (they are collectively referred to as destination information hereinafter) to mobile phone 100, mobile phone 100 transmits the destination information to PND 300 and car navigation device 200 via carrier network 700, relay server 600, and Internet network 500 (step S034). Likewise, when a user of car navigation device 200 enters destination information to car navigation device 200, car navigation device 200 transmits the destination information to mobile phone 100 and PND 300. When a user of PND 300 enters destination information to PND 300, PND 300 transmits the destination information to mobile phone 100 and car navigation device 200.

When connection between mobile phone 100, car navigation device 200, and PND 300 has been established and accordingly mobile phone 100, car navigation device 200, and PND 300 share the destination information, mobile phone 100, car navigation device 200, and PND 300 each regularly transmit current location information representing the terminal's own current location to other mobile communication terminals (step S036).

As seen from above, in network system 1 of the present embodiment, mobile phone 100, car navigation device 200, and PND 300 each can acquire (share) the current location information representing the terminal's own current location, the current location information representing respective current locations of other mobile communication terminals, and the destination information. Accordingly, each mobile communication terminal can plot and display respective current locations of the mobile communication terminals and the destination on map data stored in advance. Namely, a user of mobile phone 100, car navigation device 200, and PND 300 each can easily know the location relationship between the terminal of the user and the destination, the location relationship between the terminal of the user and another mobile communication terminal, the location relationship between another mobile communication terminal and the destination, and the like.

In the following, configurations for implementing such a capability will be described in detail.

### <Hardware Configuration of Mobile Phone 100>

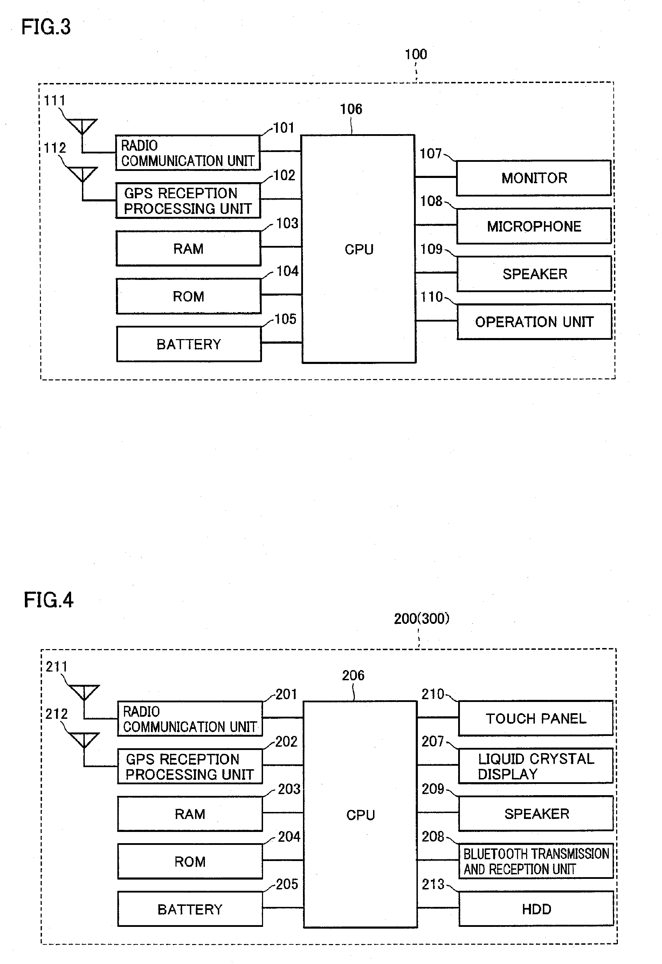

A hardware configuration of mobile phone 100 in the present embodiment will be described. Fig. 3 is a block diagram showing the hardware configuration of mobile phone 100 in the present embodiment. As shown in Fig. 3, mobile phone 100 in the present embodiment includes a CPU (Central Processing Unit) 106 for controlling each component of mobile phone 100, a communication antenna 111 transmitting and receiving a communication signal, a radio communication unit 101 converting the communication signal and data to and from each other, a positioning antenna 112 receiving radio waves from GPS satellites, a GPS signal processing unit 102 acquiring data concerning the current location based on the radio waves, a RAM (Random Access Memory) 103 storing current location information, destination information and the like, a ROM (Read Only Memory) 104 storing a control program and the like, a battery 105 supplying electric power to each component of mobile phone 100, a monitor 107 displaying an image, a microphone 108 to which external sound is input, a speaker 109 from which sound is output, and an operation unit 110 accepting input of various kinds of information.

Radio communication unit 101 converts communication data from CPU 106 into a communication signal and transmits the communication signal via communication antenna 111. Radio communication unit 101 receives a communication signal via communication antenna 111, converts the communication signal into communication data, and inputs the communication data to CPU 106.

GPS signal processing unit 102 receives via positioning antenna 112 radio waves for use in positioning, generates location data representing the current location of mobile phone 100 based on the radio waves, and inputs the location data to CPU 106.

Monitor 107 is formed of a liquid crystal panel or CRT (Cathode Ray Tube), and displays an image and text based on data output from CPU 106. Operation unit 110 accepts information from a user through a key input operation and the like.

### <Hardware Configuration of Car Navigation Device 200 and PND 300>

Next, a hardware configuration of car navigation device 200 and PND 300 in the present embodiment will be described. Since the hardware configuration of PND 300 is similar to that of car navigation device 200, the description will not be repeated.

Fig. 4 is a block diagram showing the hardware configuration of car navigation device 200 in the present embodiment. As shown in Fig. 4, car navigation device 200 in the present embodiment includes a CPU 206 for controlling each component of car navigation device 200, a communication antenna 211 transmitting and receiving a communication signal, a radio communication unit 201 converting the communication signal and data to and from each other, a positioning antenna 212 receiving radio waves from GPS satellites, a GPS signal processing unit 202 acquiring data concerning the current location based on the radio waves, a RAM 203 storing current location information, destination information and the like, a ROM 204 storing a control program and the like, a battery 205 supplying electric power to each component of car navigation device 200, a liquid crystal display 207 displaying an image, a Bluetooth (registered trademark) transmission and reception unit 208 performing short-range data communication, a touch panel 210 accepting input of various kinds of information, and an HDD (Hard Disk Drive) 213 storing a detailed load map and the like.

### <Hardware Configuration of Matching Server 400 and Relay Server 600>

Next, a hardware configuration of matching server 400 and relay server 600 in the present embodiment will be described. Since the hardware configuration of relay server 600 is similar to that of matching server 400, the description will not be repeated.

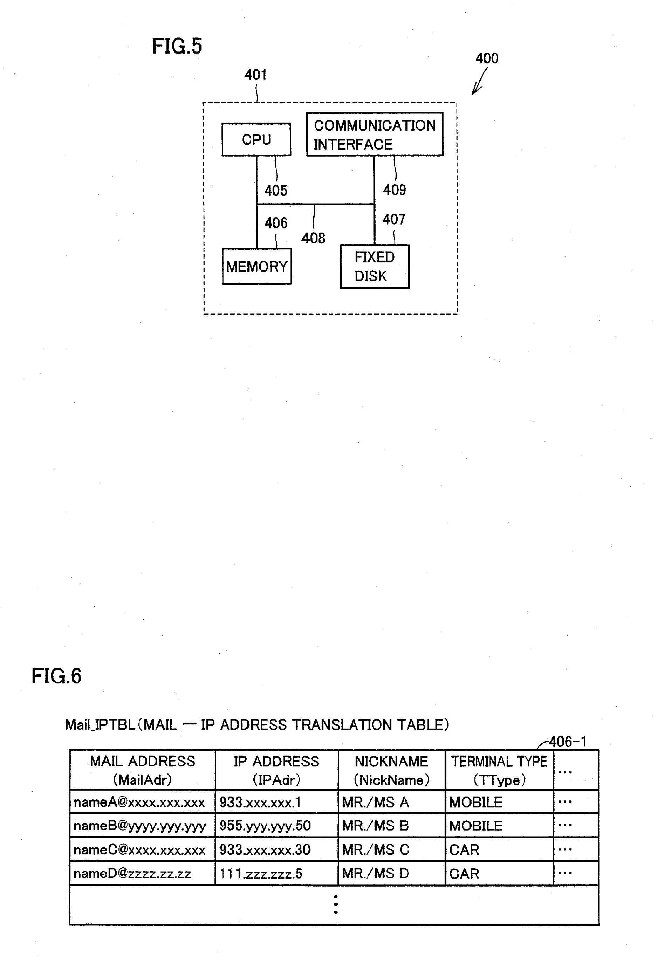

Fig. 5 is a block diagram showing the hardware configuration of matching server 400 in the present embodiment. As shown in Fig. 5, matching server 400 in the present embodiment includes a CPU 405, a memory 406, a fixed disk 407, and a communication interface 409 connected to each other by an internal bus 408.

Memory 406 serves to store various kinds of information, and temporarily stores data that is necessary for execution of a program by CPU 405, for example. Fixed disk 407 stores a program executed by CPU 105 and database. CPU 405 serves to control each element of matching server 400 and relay server 600, and is a device performing various kinds of operations.

Communication interface 409 converts data output from CPU 405 into an electrical signal and transmits the electrical signal to the outside, and converts an externally received electrical signal into data and inputs the data to CPU 405. Specifically, communication interface 409 transmits data from CPU 405 to mobile phone 100, car navigation device 200, and PND 300 via Internet network 500 and carrier network 700 for example. Communication interface 409 having received data from mobile phone 100, car navigation device 200, and PND 300 via Internet network 500 and carrier network 700 for example inputs the data to CPU 405.

Here, the data stored in memory 406 or fixed disk 407 will be described. Fig. 6 is an image diagram showing a data structure of a mail-IP address translation table 406-1 stored in memory 406 or fixed disk 407 of matching server 400. As shown in Fig. 6, in mail-IP address translation table 406-1, a mail address, an IP address, a nickname, and a terminal type are stored for each mobile communication terminal for which IP registration has been done.

Specifically, when each mobile communication terminal makes a request to matching server 400 for IP registration (step S002 in Fig. 2), CPU 405 associates the mail address, the IP address, the nickname, and the terminal type of the mobile communication terminal to each other and stores them in the form of one record in mail-IP address translation table 406-1. When a first mobile communication terminal requests matching server 400 to provide the IP address of a second mobile communication terminal (step S004 and step S014 in Fig. 2), CPU 405 reads the IP address of the second mobile communication terminal from mail-IP address translation table 406-1, based on the mail address, nickname and the like of the second mobile communication terminal. Then, CPU 406 transmits the IP address of the second mobile communication terminal to the first mobile communication terminal.

### <Functional Configuration of Each Mobile Communication Terminal>

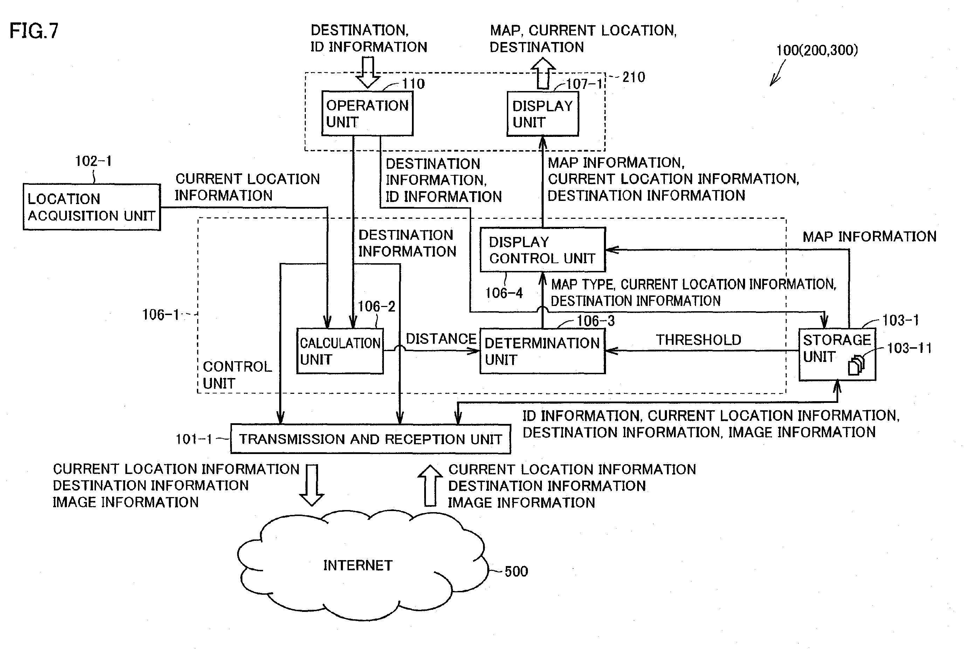

Fig. 7 is a block diagram showing a functional configuration of each mobile communication terminal in the present embodiment. As shown in Fig. 7, each mobile communication terminal in the present embodiment includes a location acquisition unit 102-1, an operation unit 110, a display unit 107-1, a control unit 106-1, a storage unit 103-1, and a transmission and reception unit 101-1.

Location acquisition unit 102-1 is implemented by positioning antenna 112 (212) and GPS signal processing unit 102 (202) for example. Location acquisition unit 102-1 receives radio waves for use in positioning, from GPS satellites and the like, and thereby acquires current location information (location coordinates including longitude and latitude) of the mobile communication terminal. Location acquisition unit 102-1 stores the acquired current location information in storage unit 103-1, and may update storage unit 103-1 based on new current location information that location acquisition unit 102-1 regularly acquires.

Operation unit 110 accepts a place for meeting, time for meeting, a mail address of another mobile communication terminal and the like provided from a user, and stores in storage unit 103-1 destination information representing the place for meeting and the time for meeting as well as the mail address of the other mobile communication terminal, and may update storage unit 103-1 based on new destination information.

Display unit 107-1 is implemented by monitor 107 or liquid crystal display 207 for example. Display unit 107-1 displays an image and text based on data from control unit 106-1. Specifically, based on data from control unit 106-1, display unit 107-1 displays, on a map, the current location of the mobile communication terminal itself, the current location of another mobile communication terminal, and a destination.

It should be noted that operation unit 110 and display unit 107-1 may be configured to be implemented by touch panel 210. In this case, touch panel 210 accepts information (handwritten input information) provided via a user's finger or stylus pen, and control unit 106-1 causes touch panel 210 to display a handwritten input image based on the handwritten input information.

More specifically, touch panel 210 inputs to control unit 106-1, based on the position (coordinate values) on the touch panel that is pressed by a user's finger or stylus pen, trajectory information made up of time series data about the coordinate values. Based on the trajectory information, control unit 106-1 causes display unit 107-1 to display a trajectory on touch panel 210 that is generated by the user's finger or stylus pen.

Transmission and reception unit 101-1 is implemented by communication antenna 111 (211) and radio communication unit 101 (201) for example. Transmission and reception unit 101-1 regularly transmits the current location information of the mobile communication terminal and the destination information that are stored in storage unit 103-1, via Internet network 500 to another mobile communication terminal. Alternatively, transmission and reception unit 101-1 may regularly transmit the current location information of the mobile communication terminal, the current location information of another mobile communication terminal, and the destination information, via Internet network 500 to another mobile communication terminal.

Transmission and reception unit 101-1 also receives the current location information of another mobile communication terminal and the destination information via Internet network 500, and stores the current location information of the other mobile communication terminal and the destination information in storage unit 103-1, and may update storage unit 103-1 based on the current location information of the other mobile communication terminal and the destination information.

### <Functional Configuration of Storage Unit 103-1>

Storage unit 103-1 is implemented by RAM 103, ROM 104, or HDD 213 for example. Storage unit 103 stores current location information of the mobile communication terminal, current location information of another mobile communication terminal, identification information of another mobile communication terminal, destination information, various kinds of map data, and the like. Specifically, storage unit 103-1 stores identification information (such as mail address) for identifying another mobile phone 100, identification information for identifying car navigation device 200, identification information for identifying PND 300 and the like that have been registered in advance by a user. Storage unit 103-1 stores map data of different kinds such as map data representing a route map, map data representing a road map, and map data representing a residential map. Storage unit 103-1 also stores map data representing maps having respective scales different from each other.

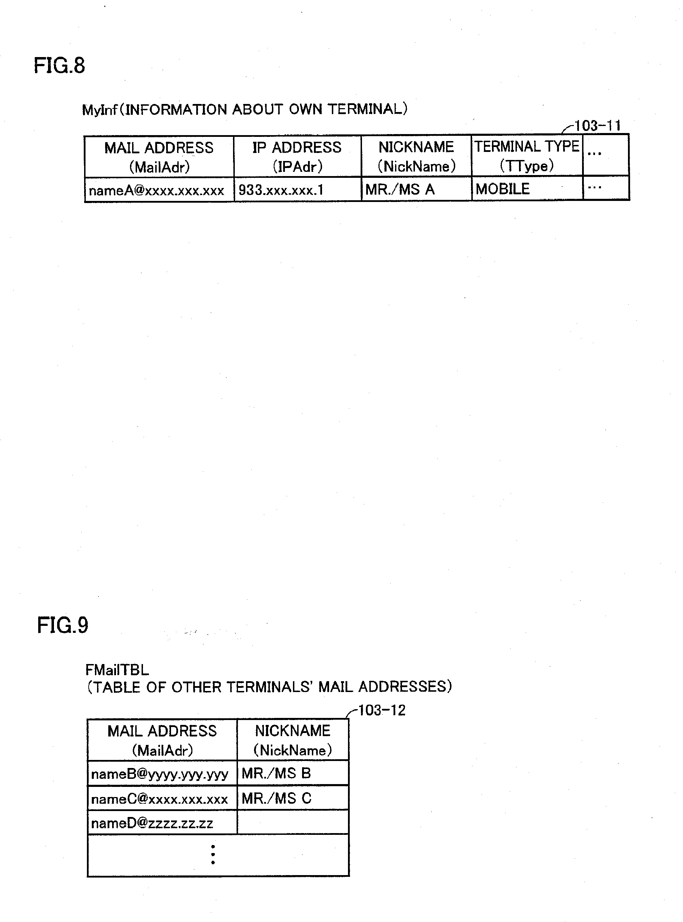

Fig. 8 is an image diagram showing a data structure of a first file 103-11 stored in storage unit 103-1. As shown in Fig. 8, storage unit 103-1 stores first file 103-11. In first file 103-11, a mail address, an IP address, a nickname, and a terminal type (such as model) of the mobile communication terminal itself are stored.

In the present embodiment, a user of the mobile communication terminal sets in advance via operation unit 110 the mail address, the nickname, and the terminal type to be stored in first file 103-11. The terminal type may be set at the time of delivery from a factory.

Fig. 9 is an image diagram showing a data structure of a second file 103-12 stored in storage unit 103-1. As shown in Fig. 9, storage unit 103-1 stores second file 103-12. Second file 103-12 stores a mail addresses, a nickname and the like of another mobile communication terminal in such a manner that the mail address, the nickname and the like of each mobile communication terminal are associated with this mobile communication terminal. As described above, in the present embodiment, a user of each mobile communication terminal registers in advance a mail address, a nickname and the like of another mobile communication terminal through operation unit 110. For example, as for the nickname, at the time when communication between mobile communication terminals is established (step S012, step S022, and step S030 in Fig. 2 for example), respective nicknames are exchanged between the terminals.

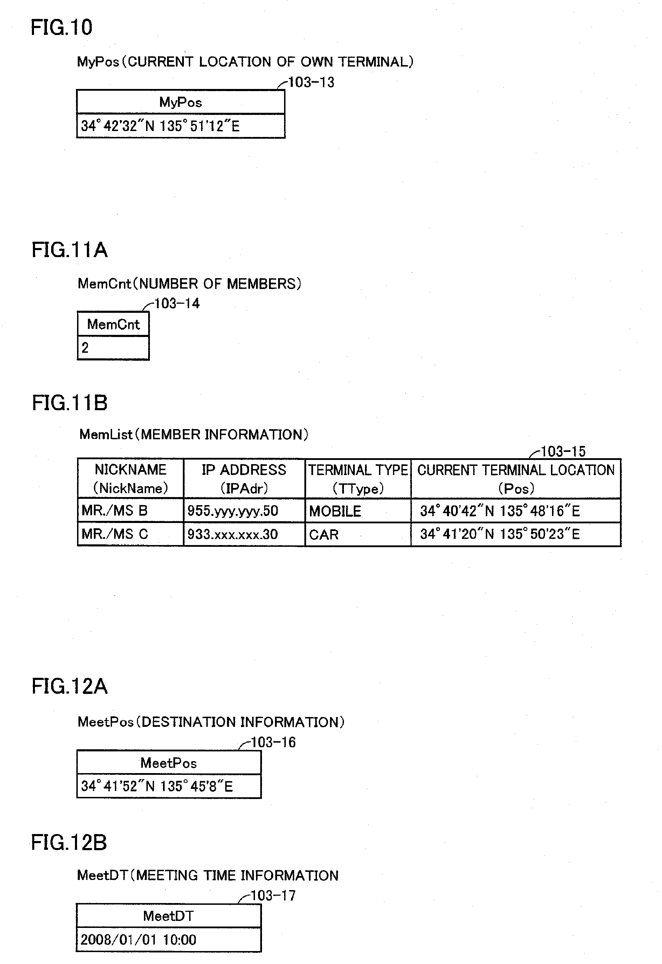

Fig. 10 is an image diagram showing a data structure of a third file 103-13 stored in storage unit 103-1. As shown in Fig. 10, storage unit 103-1 stores third file 103-13. Third file 103-13 stores the current location information of the mobile communication terminal itself that is acquired by location acquisition unit 102-1. Each time location acquisition unit 102-1 acquires new current location information of the mobile communication terminal, location acquisition unit 102-1 updates the current location information of each mobile communication terminal in third file 103-13.

Fig. 11A is an image diagram showing a data structure of a fourth file 103-14 stored in storage unit 103-1. Fig. 11B is an image diagram showing a data structure of a fifth file 103-15 stored in storage unit 103-1. As shown in Figs. 11A and 11B, storage unit 103-1 stores fourth file 103-14 and fifth file 103-15.

As shown in Fig. 11A, fourth file 103-14 stores the number of other mobile communication terminals with their communication with the mobile communication terminal established via Internet network 500. For example, when communication of mobile phone 100 with another mobile phone and another car navigation device 200 has been established, control unit 106-1 stores "2" in fourth file 103-4 of mobile phone 100.

As shown in Fig. 11B, fifth file 103-15 stores a nickname, an IP address, a terminal type, and current location information of another mobile communication terminal with its communication with the mobile communication terminal established via Internet network 500. For example, when communication of mobile phone 100 with another mobile phone and another car navigation device 200 has been established, control unit 106-1 stores in fifth file 105-15 of mobile phone 100 the nickname, the IP address, the terminal type, and the current location information of the other mobile phone and car navigation device 200 each.

In the present embodiment, when a mobile communication terminal registers its IP at matching server 400 for example, notification of the IP address of another mobile communication terminal is provided from matching server 400 (step S006 and step S016 for example in Fig. 2). When the mobile communication terminal registers its IP at matching server 400, storage unit 103-1 stores the IP address of the other mobile communication terminal received by transmission and reception unit 101-1 from matching server 400.

Fig. 12A is an image diagram showing a data structure of a sixth file 103-16 stored in storage unit 103-1. Fig. 12B is an image diagram showing a data structure of a seventh file 103-17 stored in storage unit 103-1. As shown in Figs. 12A and 12B, storage unit 103-1 stores sixth file 103-16 and seventh file 103-17. Sixth file 103-16 and seventh file 103-17 store destination information that is accepted by control unit 106-1 via operation unit 110 or that is received from another mobile communication terminal via transmission and reception unit 101-1.

Specifically, as shown in Fig. 12A, control unit 106-1 extracts from the destination information coordinate values of a meeting place that are made up of longitude and latitude, and stores the coordinate values in sixth file 103-16. As shown in Fig. 12B, control unit 106-1 also extracts meeting time from the destination information and stores the meeting time in seventh file 103-17.

### <Functional Configuration of Control Unit 106-1>

Referring back to Fig. 7, control unit 106-1 is implemented by a processor such as CPU 106 (206). Control unit 106-1 includes functions such as a calculation unit 106-2, a determination unit 106-3, and a display control unit 106-4. More specifically, the functions of control unit 106-1 are each a function exercised by CPU 106 executing a program stored in RAM 103, ROM 104 or the like and controlling each hardware component shown in Figs. 3 and 4. For example, the functions of control unit 106-1 are each implemented by CPU 106 reading a program stored in ROM 104 temporarily into RAM 103, and successively executing the program while reading the program from RAM 103.

Control unit 106-1 reads the current location information of each mobile communication terminal that is stored in third file 103-13 of storage unit 103-1, reads the current location information of another mobile communication terminal stored in fifth file 103-15 of storage unit 103-1, and reads the destination information stored in sixth file 103-16 of storage unit 103-1, and then refers to the map data stored in storage unit 103 to cause display unit 107-1 to display on a map the current location of the mobile communication terminal, the current location of the other mobile communication terminal, and the destination.

More specifically, calculation unit 106-2 reads from third file 103-13 the current location information of the mobile communication terminal itself, and reads the destination information from sixth file 103-16. Based on the current location information and the destination information, calculation unit 106-2 calculates the distance from the current location to the destination. It should be noted that calculation unit 106-2 may read the current location information of another mobile communication terminal from fifth file 103-15, and then calculate the distance from the current location of the other mobile communication terminal to the destination.

Then, based on the distance calculated by calculation unit 106-2, determination unit 106-3 determines the type of the map. Specifically, based on the current location information of the mobile communication terminal itself and the destination information, determination unit 106-2 selects a map of a scale (rate of enlargement) that can show the current location of the mobile communication terminal itself and the destination at the same time.

Alternatively, determination unit 106-3 determines the type of the map based on the largest distance among distances calculated by calculation unit 106-2. Specifically, based on the current location information of the mobile communication terminal itself, the current location information of all other mobile communication terminals, and the destination information, determination unit 106-3 selects a map of a scale that can show the current location of the mobile communication terminal itself, respective current locations of all other mobile communication terminals, and the destination at the same time.

Alternatively, determination unit 106-3 reads the type of the mobile communication terminal itself from first file 103-11, reads the type of another mobile communication terminal from fifth file 103-15, and determines the type of the map based on these types of the mobile communication terminals. Specifically, when the mobile communication terminal itself is a mobile phone, determination unit 106-3 selects a route map or residential map. When the mobile communication terminal itself is a car navigation device, determination unit 106-3 selects a road map.

Here, determination unit 106-3 may determine the type of the map based on the distance and the type of the terminal. For example, when the mobile communication terminal itself is a mobile phone and the distance between the current location of the mobile communication terminal itself and the destination is less than a first threshold (1 km for example) stored in advance in storage unit 103-1, determination unit 106-3 selects a residential map. When the mobile communication terminal itself is a mobile phone and the distance between the mobile communication terminal itself and the destination information is not less than the first threshold, determination unit 106-3 selects a route map.

When the mobile communication terminal itself is a car navigation device and the distance between the current location of the mobile communication terminal itself and the destination is less than a second threshold (5 km for example) stored in advance in storage unit 103-1, determination unit 106-3 selects the residential map. When the mobile communication terminal itself is a car navigation device and the distance between the current location of the mobile communication terminal itself and the destination is not less than the second threshold, determination unit 106-3 selects the road map.

Further, operation unit 110 may accept an instruction to select a map type and determination unit 106-3 may select the map based on the instruction to select.

Display control unit 106-4 reads map data of the map type determined by determination unit 106-3. Based on the map data, display control unit 106-4 causes display unit 107-1 to display the current location of the mobile communication terminal itself, the current location of the other mobile communication terminal, and the destination at the same time.

Preferably, display control unit 106-4 determines whether to cause the current location of the other mobile communication terminal to be displayed or not, based on the map type selected by determination unit 106-3.

Preferably, display control unit 106-4 may refer to fifth file 103-15 of storage unit 103-1 to determine whether the type of the mobile communication terminal itself and the type of the other mobile communication terminal are identical, and then determine whether to cause the current location of the other mobile communication terminal to be displayed, based on the result of the determination.

For example, when the distance between the current location of the mobile communication terminal itself and the destination is not less than the first or second threshold or when the type of the mobile communication terminal itself and the type of the other mobile communication terminal are identical, display control unit 106-4 causes the current location of the other mobile communication terminal to be displayed. When the distance between the current location of the mobile communication terminal itself and the destination is less than the first or second threshold and the type of the mobile communication terminal itself and the type of the other mobile communication terminal are different from each other, display control unit 106-4 does not cause the current location of the other mobile communication terminal to be displayed.

For example, it is supposed that display control unit 106-4 of mobile phone 100 causes a route map to be displayed. Then, only when respective types of the mobile communication terminal itself and the other mobile communication terminal are the same, display control unit 106-4 of mobile phone 100 causes the current location of the other mobile communication terminal to be displayed. For example, it is supposed that display control unit 106-4 of car navigation device 200 causes a road map adapted to long distances (small scale, small rate of enlargement) to be displayed. Then, only when respective types of the mobile communication terminal itself and the other mobile communication terminal are the same, display control unit 106-4 of car navigation device 200 causes the current location of the other mobile communication terminal to be displayed.

### <Image Data Transmission Capability>

Transmission and reception unit 101-1 in the present embodiment can transmit image data concerning an image displayed by display unit 107-1, via Internet network 500 to another mobile communication terminal. The image data includes, for example, map data for displaying a map and advertisement data for displaying an advertisement. More specifically, when control unit 106-1 transmits the current location information to another mobile communication terminal or when a user's instruction to transmit an image is accepted via operation unit 110, the image data (such as bitmap data and text data for example) that is output from control unit 106-1 to display unit 107-1 is transmitted to the other mobile communication terminal.

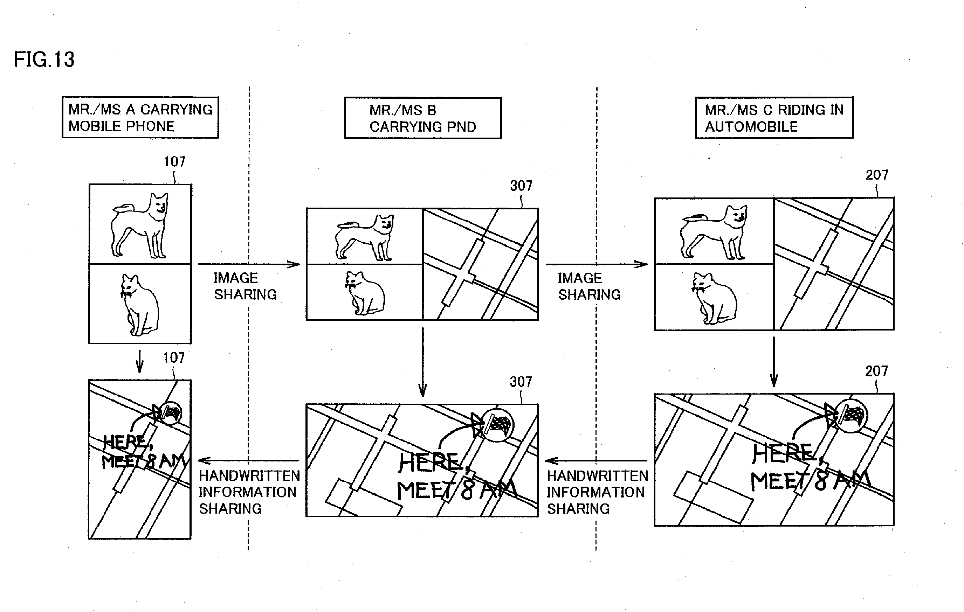

Fig. 13 is an image diagram showing a state where image data is shared by mobile communication terminals. As shown in Fig. 13, the mobile communication terminal in the present embodiment can view an image displayed by display unit 107-1 of another mobile communication terminal (upper row in Fig 13), without accessing another site on Internet network 500 by itself. Namely, mobile communication terminals can share image information.

Transmission and reception unit 101-1 also transmits handwritten input information representing an image input by handwriting on touch panel 210 to another mobile communication terminal. In other words, display unit 107-1 of the mobile communication terminal can also display an image input by handwriting to another mobile communication terminal (lower row in Fig. 13). Namely, mobile communication terminals can share handwritten input information.

### <Transmission of Destination Information>

A description will be given of a flow of data in network system 1 of the present embodiment when each mobile communication terminal transmits destination information. In network system 1 of the first embodiment, each mobile communication terminal transmits its current location information to respective IP addresses of all other mobile communication terminals that are stored in storage unit 103-1 (such a type of data transmission will also be referred to as broadcasting type hereinafter).

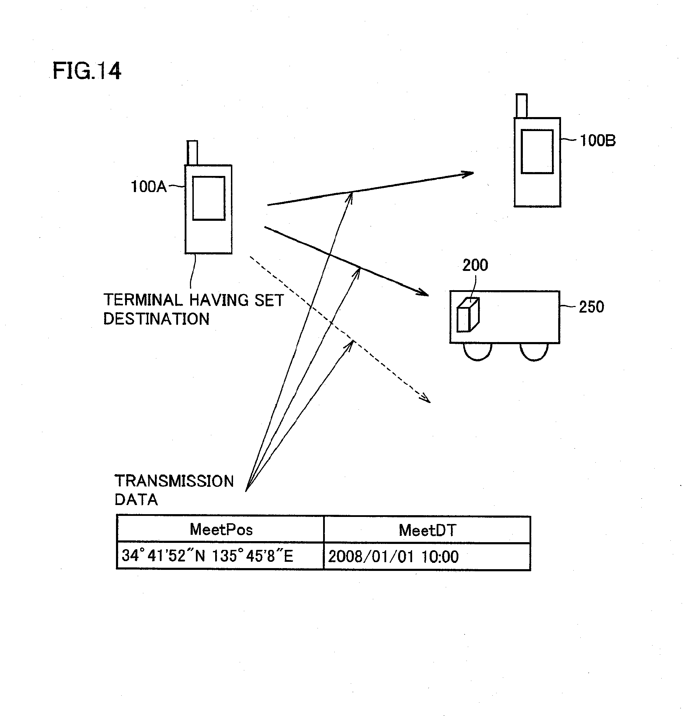

Fig. 14 is an image diagram showing a flow of data when a mobile communication terminal transmits destination information. In the following, a description will be given of a case where respective IPs of a mobile phone 100A, a mobile phone 100B, and car navigation device 200 mounted on an automobile 250 have been registered at matching server 400.

As shown in Fig. 14, when destination information is input to mobile phone 100A for example, mobile phone 100A reads from fifth file 103-15 of storage unit 103-1 the IP address of another mobile phone 100B and the IP address of car navigation device 200 with their IPs having been registered at matching server 400, and transmits the destination information to the other mobile phone 100B and car navigation device 200. Specifically, control unit 106-1 of mobile phone 100A reads from sixth file 103-16 of storage unit 103-1 coordinate values of a place for meeting, reads time for meeting from seventh file 103-17, and transmits them as the destination information via transmission and reception unit 101-1. Namely, the data transmitted as the destination information includes the coordinate values of the place for meeting and the time for meeting.

### <Transmission of Current Location Information>

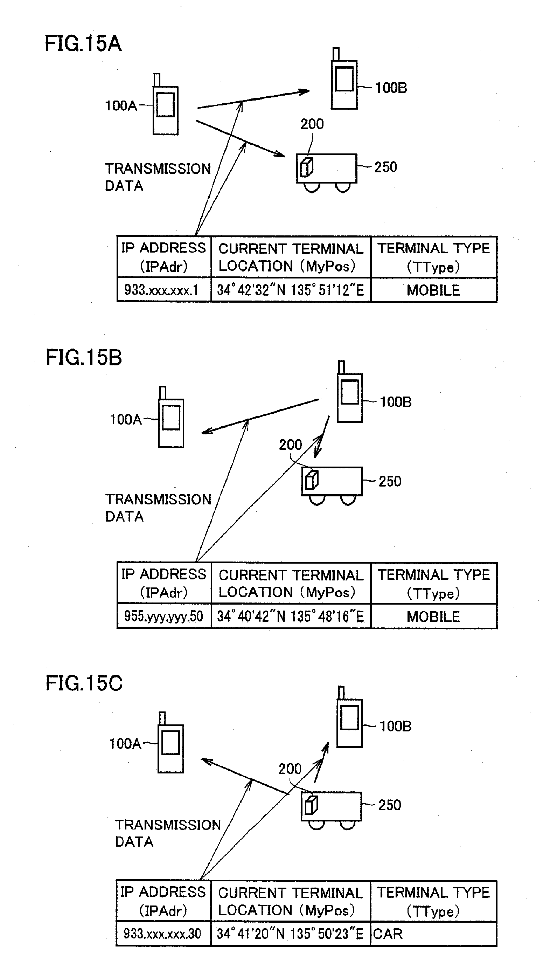

A description will be given of a flow of data in network system 1 of the present embodiment when each mobile communication terminal transmits its current location information. Fig. 15A is a first image diagram showing a flow of data when each mobile communication terminal transmits its current location information. Fig. 15B is a second image diagram showing a flow of data when each mobile communication terminal transmits its current location information. Fig. 15C is a third image diagram showing a flow of data when each mobile communication terminal transmits its current location information. In the following, a description will be given of control after direct interconnection between mobile phone 100A, mobile phone 100B, and car navigation device 200 mounted on automobile 250 has been established via matching server 400.

As shown in Fig. 15A, mobile phone 100A regularly transmits current location information representing its current location to mobile phone 100B and car navigation device 200 via Internet network 500 (see Fig. 1). As shown in Fig. 15B, mobile phone 100B regularly transmits current location information representing its current location to car navigation device 200 and mobile phone 100A via Internet network 500. As shown in Fig. 15C, car navigation device 200 regularly transmits current location information representing its current location to mobile phone 100A and mobile phone 100B via Internet network 500.

Namely, in network system 1 of the present embodiment, each mobile communication terminal regularly transmits its current location information to all other mobile communication terminals with respective IPs (stored in its fifth file 103-15) having been registered at matching server 400.

### <Map Display Processing in Mobile Phone 100>

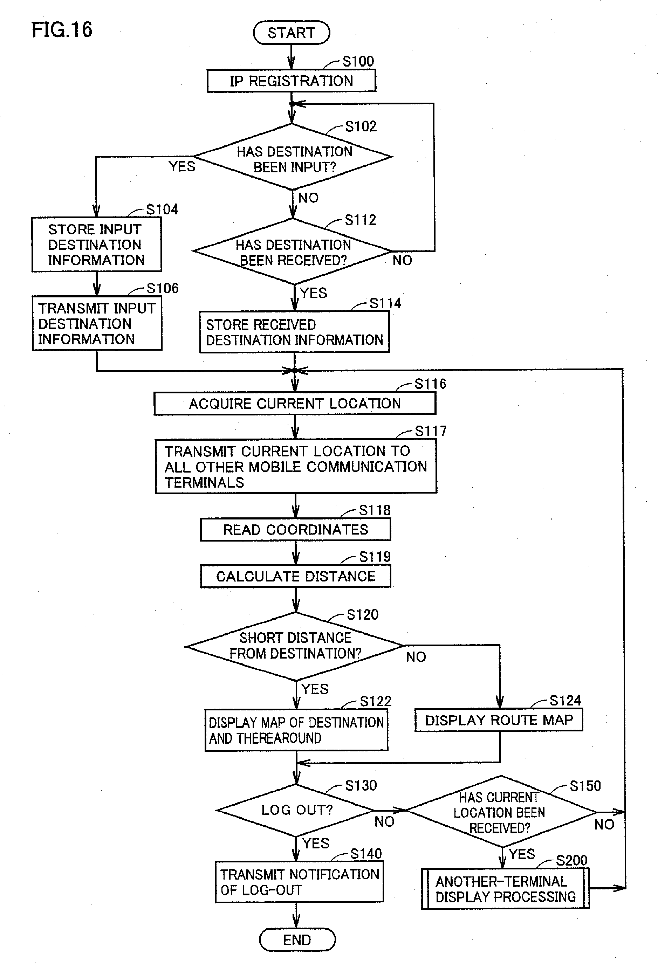

Next, map display processing in mobile phone 100 of the present embodiment will be described. Fig. 16 is a flowchart showing a procedure followed by mobile phone 100 in the present embodiment for current location display processing of displaying its current location.

As shown in Fig. 16, mobile phone 100 registers its IP at matching server 400 via carrier network 700, relay server 600, and Internet network 500 (step S100). At this time, mobile phone 100 requests the IP address of another mobile communication terminal based on the mail address of the other mobile communication terminal stored in storage unit 103-1. Matching server 400 transmits in return to mobile phone 100 the IP address of the other mobile communication terminal with its IP registration completed at matching server 400.

Mobile phone 100 determines whether a user has input destination information (step S102). When control unit 106-1 accepts via operation unit 110 a place for meeting and time for meeting (destination information) (YES in step S102), control unit 106-1 stores the destination information in storage unit 103-1 (step S104). Based on the IP address received from matching server 400, transmission and reception unit 101-1 transmits the destination information to the other mobile communication terminal (step S106).

In contrast, when destination information has not been input to operation unit 110 (NO in step S102), control unit 106-1 determines whether destination information has been received from the other mobile communication terminal (step S112). When the destination information has been received from the other mobile communication terminal (YES in step S112), control unit 106-1 stores the received destination information in storage unit 103-1 (step S114).

Next, location acquisition unit 102-1 acquires current location information of mobile phone 100 (step S116). Based on the IP address received from matching server 400, transmission and reception unit 101-1 transmits the current location information to the other mobile communication terminal (step S117). Control unit 106-1 reads coordinates of the current location of mobile phone 100 and coordinates of the destination from storage unit 103-1 (step S118), and calculates the distance between the current location of mobile phone 100 and the destination (step S119).

Control unit 106-1 determines whether the distance is a short distance (step S120), namely determines whether the distance is less than a predetermined first threshold. When the distance between the current location of mobile phone 100 and the destination is a short distance (YES in step S120), control unit 106-1 causes display unit 107-1 to display a map of a large scale (large rate of enlargement) showing the destination and therearound (step S122).

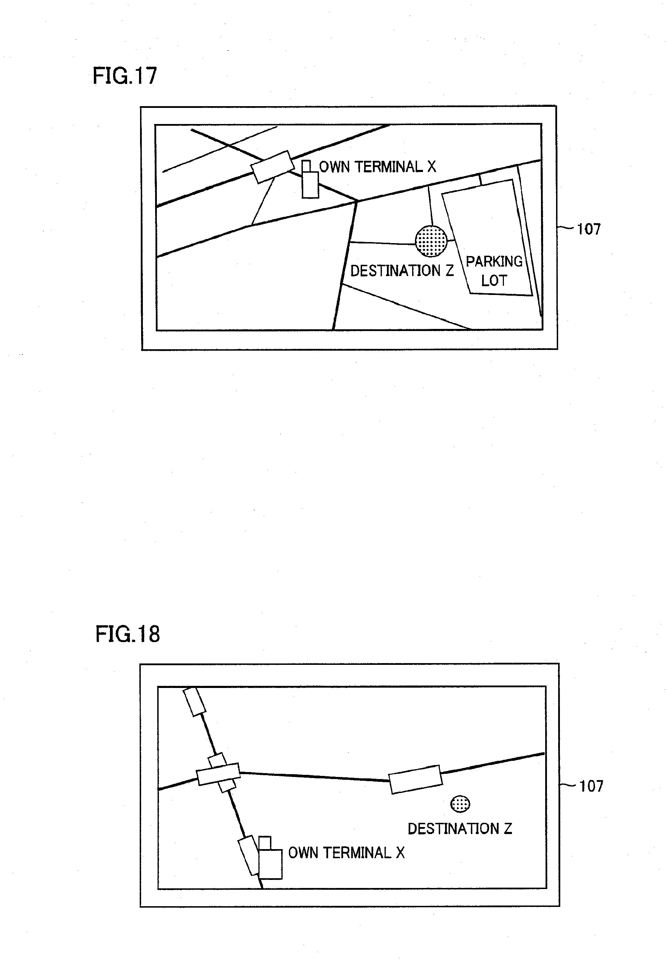

Fig. 17 is an image diagram showing a state where display unit 107-1 of mobile phone 100 displays the current location of own terminal, namely mobile phone 100 itself on a map of a large scale showing the destination and therearound. As shown in Fig. 17, in step S122, control unit 106-1 causes display unit 107-1 to display current location X of mobile phone 100 and destination Z all together on a residential map of a large scale for example.

In contrast, when the distance between the current location of the mobile phone and the destination is a long distance (NO in step S120), control unit 106-1 causes display unit 107-1 to display a map of a small scale (small rate of enlargement) (step S124).

Fig. 18 is an image diagram showing a state where display unit 107-1 of mobile phone 100 displays the current location of own terminal, namely mobile phone 100 itself on a route map of a small scale. As shown in Fig. 18, in step S124, control unit 106-1 causes display unit 107-1 to display current location X of mobile phone 100 and destination Z all together on a route map of a small scale for example.

Referring to Fig. 16, when display unit 107-1 displays the map, control unit 106-1 determines whether operation unit 110 has accepted a log-out instruction (IP address delete instruction) (step S130). When operation unit 110 has accepted the log-out instruction, transmission and reception unit 101-1 transmits a log-out request to matching server 400 via Internet network 500 (step S140).

In contrast, when operation unit 110 has not accepted the log-out instruction to matching server 400 (NO in step S130), control unit 106-1 determines whether transmission and reception unit 101-1 has received current location information from another mobile communication terminal (step S150). When transmission and reception unit 101-1 has received the current location information from the other mobile communication terminal (YES in step S150), control unit 106-1 executes the current location display processing for displaying the current location of the other terminal (step S200). In contrast, when transmission and reception unit 101-1 has not received current location information from the other mobile communication terminal (NO in step S150), control unit 106-1 executes the processing from step S116.

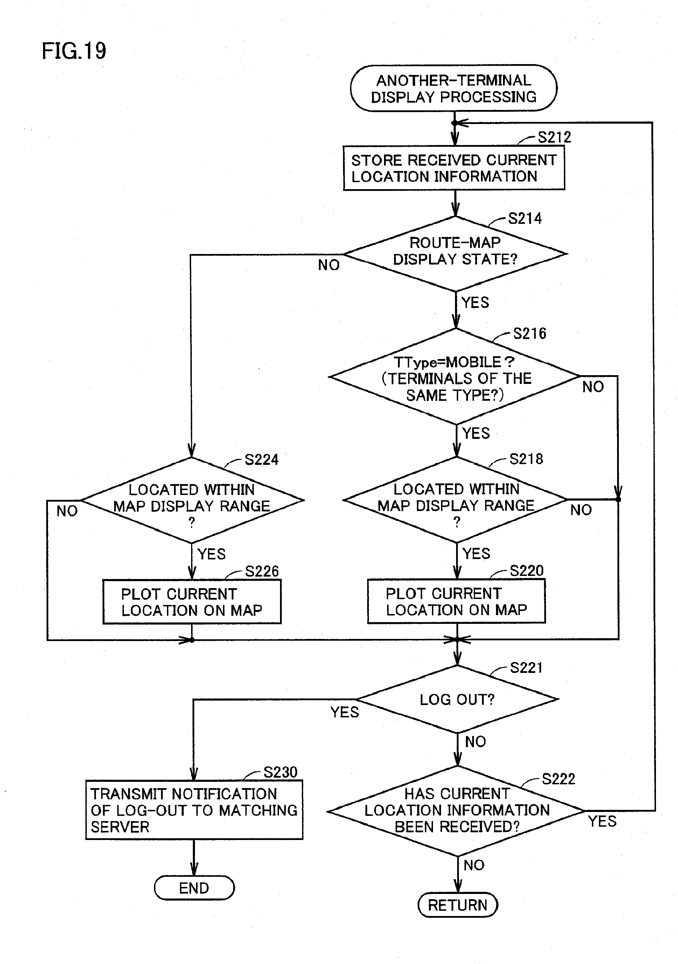

Fig. 19 is a flowchart showing a procedure followed by mobile phone 100 in the present embodiment for the current location display processing of displaying the current location of another terminal. As shown in Fig. 19, when transmission and reception unit 101-1 has received current location information from another mobile communication terminal (YES in step S150), control unit 106-1 stores (updates) the current location information in storage unit 103-1 (step S212). Then, control unit 106-1 determines whether display unit 107-1 displays a route map (step S214).

When display unit 107-1 displays the route map (YES in step S214), control unit 106-1 determines whether the type of the mobile phone is the same as the type of the other mobile communication terminal (step S216). Namely, control unit 106-1 reads TType of fifth file 103-15 and determines whether TType is MOBILE (TType = MOBILE).

When the type of the other mobile communication terminal is the same as that of mobile phone 100 (YES in step S216), it is determined whether the current location of the other mobile communication terminal is within a range displayed by display unit 107-1 (step S218). When the current location of the other mobile communication terminal is located in the range displayed by display unit 107-1 (YES in step S218), control unit 106-1 causes display unit 107-1 to display on the map the current location of mobile phone 100, the current location of the other mobile communication terminal, and the destination (step S220).

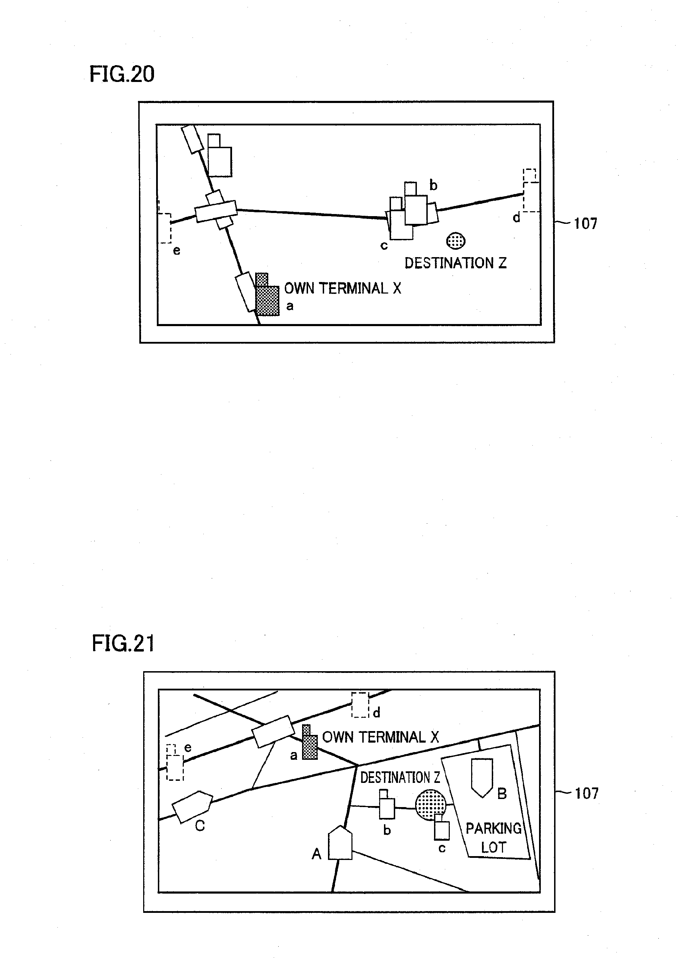

Fig. 20 is an image diagram showing a state where display unit 107-1 of mobile phone 100 displays the current location of another terminal on a route map of a small scale. As shown in Fig. 20, in step S220, control unit 106-1 causes display unit 107-1 to display the current location of mobile phone 100, the current location of another mobile phone 100, and the destination all together on a route map of a small scale for example.

After this, control unit 106-1 determines whether operation unit 110 has accepted a log-out instruction (IP address delete instruction) (step S221). When operation unit 110 has accepted the log-out instruction, transmission and reception unit 101-1 transmits a log-out request to matching server 400 via Internet network 500 (step S230).

In contrast, when operation unit 110 has not accepted the log-out instruction (NO in step S221), control unit 106-1 determines whether transmission and reception unit 101-1 has received current location information from another mobile communication terminal (step S222). When transmission and reception unit 101-1 has received the current location information from the other mobile communication terminal (YES in step S222), the processing is executed from step S212.

When the current location of the other mobile communication terminal is not located in the range displayed by display unit 107-1 (NO in step S218), or when the other mobile communication terminal is not mobile phone 100 (NO in S216), control unit 106-1 executes the processing from step S221. Namely, when display unit 107-1 displays a map of a large scale for example, control unit 106-1 causes only another mobile phone 100 located in the display range to be additionally displayed.

In contrast, when display unit 107-1 does not display a route map (NO in step S214), it is determined whether the current location of the other mobile communication terminal is located in the range displayed by display unit 107-1 (step S224). When the current location of the other mobile communication terminal is located in the range displayed by display unit 107-1 (YES in step S224), control unit 106-1 causes display unit 107-1 to display the current location of the mobile phone itself, the current location of the other mobile communication terminal, and the destination on the map (step S226). After this, the processing is executed from step S221.

Fig. 21 is an image diagram showing a state where display unit 107-1 of mobile phone 100 displays the current location of another terminal on a residential map of a large scale. As shown in Fig. 21, in step S226, control unit 106-1 causes display unit 107-1 to display the current location of mobile phone 100, the current location of another mobile phone 100, and the destination all together on a residential map of a large scale for example. Namely, when display unit 107-1 displays a map of a large scale, control unit 106-1 causes another mobile communication terminal located in the displayed range to be additionally displayed regardless of respective types of the mobile communication terminals. After this, control unit 106-1 executes the processing from step S221.

When the current location of the other mobile communication terminal is not located in the range displayed by display unit 107-1 (NO in step S224) as well, control unit 106-1 executes the processing from step S221. Then, when transmission and reception unit 101-1 has not received the current location information from the other mobile communication terminal (NO in step S222), control unit 106-1 executes the processing from step S116 in Fig. 16.

### <Map Display Processing in Car Navigation Device 200>

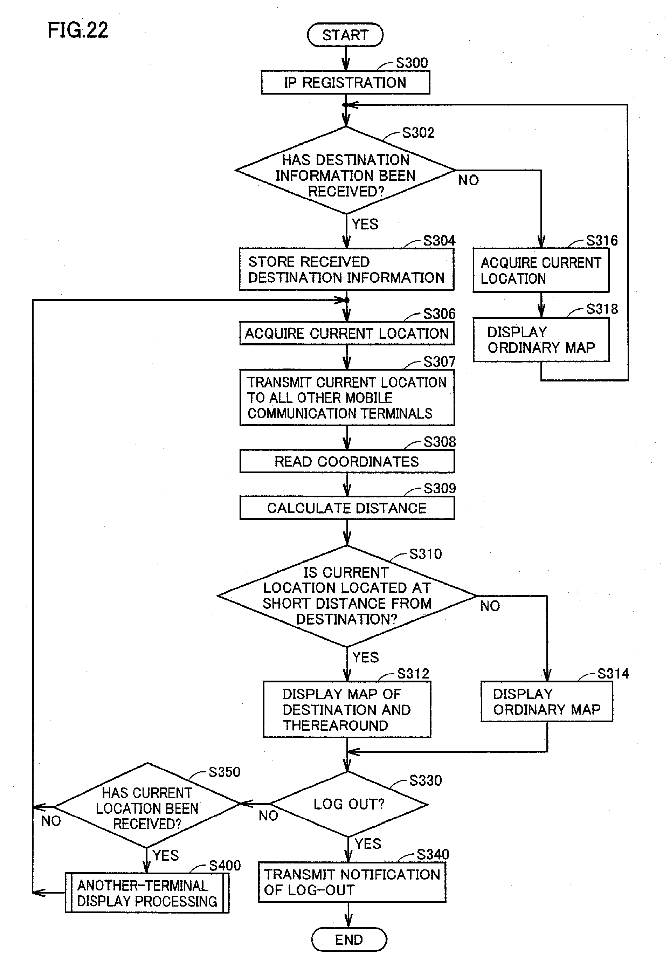

Next, map display processing in car navigation device 200 of the present embodiment will be described. Fig. 22 is a flowchart showing a procedure followed by car navigation device 200 in the present embodiment for current location display processing of displaying its current location. In the following, a description will be given of a case where destination information is not input to car navigation device 200 (car navigation device only accepts destination information from another mobile communication terminal). Further, because a procedure of map display processing in PND 300 is similar to that of car navigation device 200, the description will not be repeated.

As shown in Fig. 22, car navigation device 200 registers its IP at matching server 400 via Internet network 500 (step S300). At this time, based on the mail address of another mobile communication terminal stored in storage unit 103-1, car navigation device 200 makes a request to matching server 400 for the IP address of the other mobile communication terminal. Matching server 400 transmits in return to car navigation device 200 the IP address of the other mobile communication terminal with its IP registration completed at matching server 400.

Transmission and reception unit 101-1 of car navigation device 200 awaits destination information from the other mobile communication terminal (step S302). When transmission and reception unit 101-1 has received the destination information from the other mobile communication terminal (YES in step S302), control unit 106-1 stores the received destination information in storage unit 103-1 (step S304).

Next, location acquisition unit 102-1 acquires current location information of car navigation device 200 (step S306). Based on the IP address received from matching server 400, transmission and reception unit 101-1 transmits the current location information to the other mobile communication terminal (step S307).

Control unit 106-1 reads from storage unit 103-1 coordinates of the current location of car navigation device 200 and coordinates of the destination (step S308), and calculates the distance between the current location of car navigation device 200 and the destination (step S309).

Control unit 106-1 determines whether the distance is a short distance (step S310). Namely, the control unit determines whether the distance is less than a predetermined second threshold. When the distance between the current location of car navigation device 200 and the destination is a short distance (YES in step S310), control unit 106-1 causes display unit 107-1 to display a map of a large scale (large rate of enlargement) showing the destination and therearound (step S312).

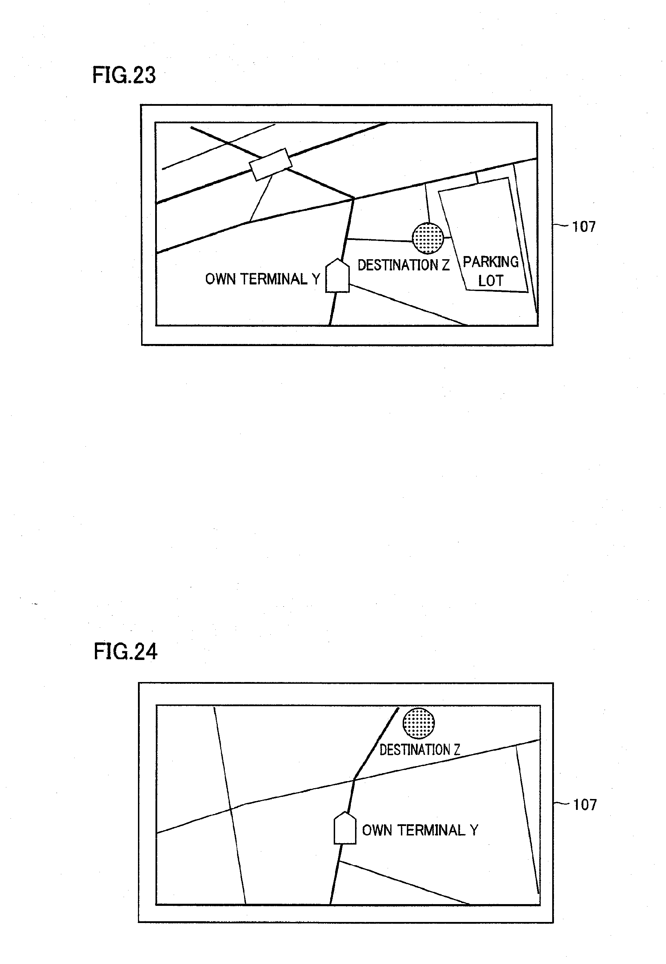

Fig. 23 is an image diagram showing a state where display unit 107-1 of car navigation device 200 displays the current location of own terminal, namely the car navigation device itself on a map of a large scale showing the destination and therearound. As shown in Fig. 23, in step S312, control unit 106-1 causes display unit 107-1 to display current location Y of car navigation device 200 and destination Z all together on a residential map of a large scale for example.

In contrast, when the distance between current location Y of car navigation device 200 and destination Z is a long distance (NO in step S310), control unit 106-1 causes display unit 107-1 to display a map (ordinary road map) of a small scale (step S314).

Fig. 24 is an image diagram showing a state where display unit 107-1 of car navigation device 200 displays the current location of own terminal, namely the car navigation device itself on a road map of a small scale. As shown in Fig. 24, in step S324, control unit 106-1 causes display unit 107-1 to display current location Y of car navigation device 200 and destination Z all together on a road map of a small scale for example.

In contrast, when transmission and reception unit 101-1 has not received destination information from the other mobile communication terminal (NO in step S302), location acquisition unit 102-1 acquires current location information of car navigation device 200 (step S316). Control unit 106-1 causes display unit 107-1 to display the current location of car navigation device 200 on a map (ordinary road map) of a small scale (step S318).

In step S312 or step S314, when display unit 107-1 displays the map, control unit 106-1 determines whether operation unit 110 has accepted a log-out instruction (IP address delete instruction) (step S330). When operation unit 110 has accepted the log-out instruction, transmission and reception unit 101-1 transmits the log-out request via Internet network 500 to matching server 400 (step S340).

In contrast, when operation unit 110 has not accepted the log-out instruction to matching server 400 (NO in step S330), control unit 106-1 determines whether transmission and reception unit 101-1 has received current location information from the other mobile communication terminal (step S350). When transmission and reception unit 101-1 has received the current location information from the other mobile communication terminal (YES in step S350), control unit 106-1 executes current location display processing (step S400) of displaying the current location of the other terminal. In contrast, when transmission and reception unit 101-1 has not received the current location information from the other mobile communication terminal (NO in step S350), control unit 106-1 executes the processing from step S306.

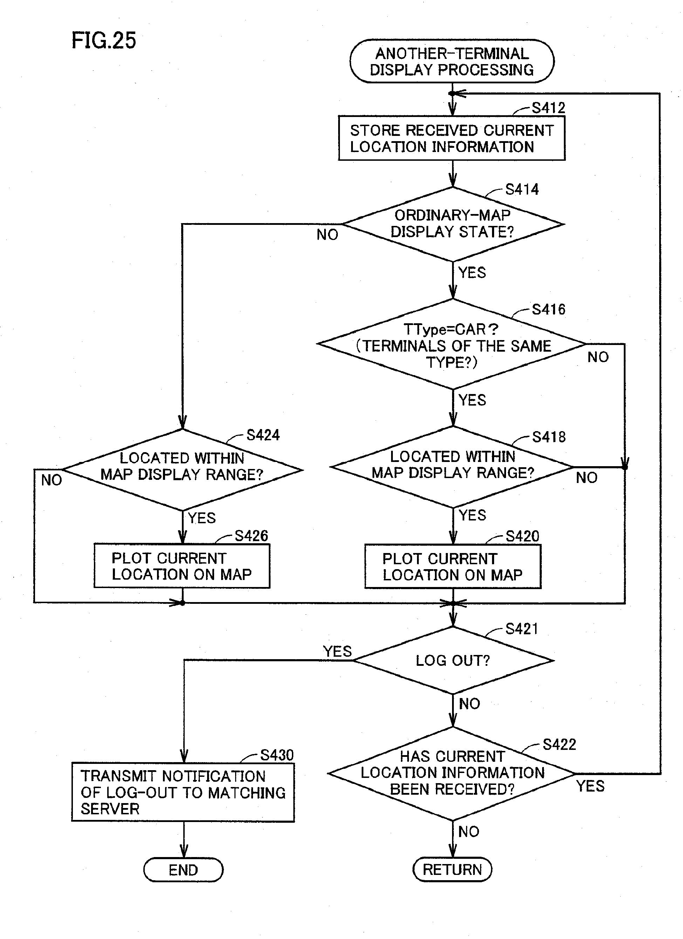

Fig. 25 is a flowchart showing a procedure followed by car navigation device 200 in the present embodiment for current location display processing of displaying the current location of another terminal. As shown in Fig. 25, when transmission and reception unit 101-1 has received current location information from another mobile communication terminal (YES in step S350), control unit 106-1 stores (updates) the current location information in storage unit 103-1 (step S412). Then, control unit 106-1 determines whether display unit 107-1 displays a road map (step S414).

When display unit 107-1 displays the road map (YES in step S414), control unit 106-1 determines whether the type of the other mobile communication terminal is the same as the type of the car navigation device (step S416). Namely, control unit 106-1 reads TType of fifth file 103-15 and determines whether TType is CAR (TType = CAR).

When the type of the other mobile communication terminal is the same as the type of the car navigation device (YES in step S416), it is determined whether the current location of the other mobile communication terminal is located in the range displayed by display unit 107-1 (step S418). When the current location of the other mobile communication terminal is located in the range displayed by display unit 107-1 (YES in step S418), control unit 106-1 causes display unit 107-1 to display the current location of the car navigation device, the current location of the other mobile communication terminal, and the destination on the map (step S420).

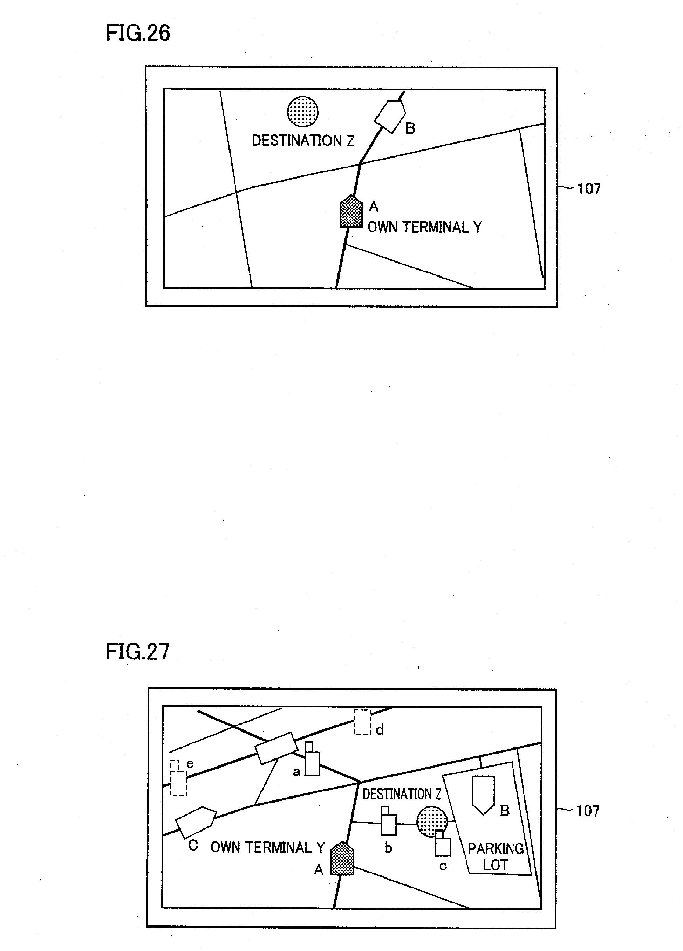

Fig. 26 is an image diagram showing a state where display unit 107-1 of car navigation device 200 displays the current location of another terminal on a road map. As shown in Fig. 26, in step S420, control unit 106-1 causes display unit 107-1 to display the current location of car navigation device 200, the current location of another car navigation device 200, and the destination all together on a road map of a small scale for example.

After this, control unit 106-1 determines whether operation unit 110 has accepted a log-out instruction (step S421). When operation unit 110 has accepted the log-out instruction, transmission and reception unit 101-1 transmits a log-out request via Internet network 500 to matching server 400 (step S430).

In contrast, when operation unit 110 has not accepted the log-out instruction (NO in step S421), control unit 106-1 determines whether transmission and reception unit 101-1 has received current location information from the other mobile communication terminal (step S422). When transmission and reception unit 101-1 has received the current location information from the other mobile communication terminal (YES in step S422), the processing is executed from step S412.

When the current location of the other mobile communication terminal is out of the range displayed by display unit 107-1 (NO in step S418), or the other mobile communication terminal is not car navigation device 200 (NO in step S416), control unit 106-1 executes the processing from step S421. Namely, when display unit 107-1 displays a map of a small scale for example, control unit 106-1 causes only the other car navigation device 200 located in the display range to be additionally displayed.

In contrast, when display unit 107-1 does not display a road map (NO in step S414), it is determined whether the current location of the other mobile communication terminal is located within the range displayed by display unit 107-1 (step S424). When the current location of the other mobile communication terminal is located in the range displayed by display unit 107-1 (YES in step S424), control unit 106-1 causes display unit 107-1 to display the current location of the car navigation device itself, the current location of the other mobile communication terminal, and the destination on the map (step S426). After this, control unit 106-1 performs the processing from step S421.

Fig. 27 is an image diagram showing a state where display unit 107-1 of car navigation device 200 displays the current location of another terminal on a residential map. As shown in Fig. 27, in step S426, control unit 106-1 causes display unit 107-1 to display, on a residential map of a large scale for example, the current location of car navigation device 200, the current location of the other mobile communication terminal, and the destination all together. Namely, when display unit 107-1 displays a map of a large scale, control unit 106-1 causes the other mobile communication terminal located in the display range to be additionally displayed regardless of respective types of the terminals. After this, control unit 106-1 executes the processing from step S421.

When the current location of the other mobile communication terminal is not located in the range displayed by display unit 107-1 (NO in step S424) as well, control unit 106-1 executes the processing from step S421. Then, when transmission and reception unit 101-1 does not receive current location information from the other mobile communication terminal any more (NO in step S422), control unit 106-1 executes the processing from step S306 of Fig. 22.

In this way, in network system 1 of the present embodiment, a user of a mobile communication terminal can easily know the location relationship between the location of the terminal itself, the location of another mobile communication terminal, and the destination. Further, mobile communication terminals forming network system 1 are of various types, and each mobile communication terminal can acquire current location information of another mobile communication terminal of a different type. Therefore, a user carrying mobile phone 100 for example can know the current location of not only a user carrying another mobile phone but also the current location of a user carrying car navigation device 200.

In addition, each mobile communication terminal changes the type and the scale of the map to be displayed, depending on the distance between the current location of the mobile communication terminal and the destination, the type of the mobile communication terminal, and the type of another mobile communication terminal, for example, and therefore, a limited space of the display unit can be used effectively to more appropriately display the information about respective locations of mobile communication terminals.

### [Second Embodiment]

A second embodiment of a network system 1b will now be described. In network system 1 of the first embodiment, each mobile communication terminal transmits its current location information to respective IP addresses of all other mobile communication terminals stored in storage unit 103-1. In network system 1b of the present embodiment, each mobile communication terminal transmits its current location information and its storing current location information of other mobile communication terminals, to the IP address of selected one of the other mobile communication terminals (such a form of transmitting current location information will also be referred to as bucket-brigade type hereinafter).

The general operation and the entire configuration of network system 1b, respective hardware configurations of mobile phone 100, car navigation device 200, and PND 300, and respective functional configurations of mobile phone 100, car navigation device 200, and PND 300 are similar to those of network system 1 in the first embodiment, and thus the description thereof will not be repeated here. In the following, a flow of data in network system 1b of the present embodiment and an operational procedure of each mobile communication terminal will mainly be described.

### <Transmission of Destination Information>

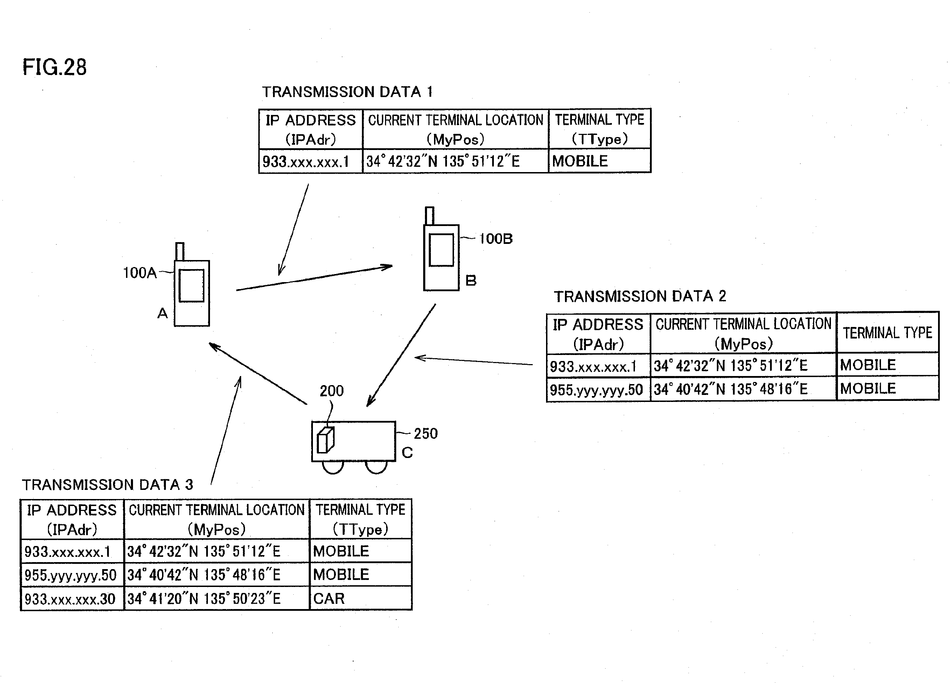

First, a description will be given of a flow of data when each mobile communication terminal transmits its current location information in network system 1 in the present embodiment. Fig. 28 is an image diagram showing a flow of data when each mobile communication terminal transmits its current location information in the present embodiment. In the following, a description will be given of control performed after interconnection between a mobile phone 100A, a mobile phone 100B, and car navigation device 200 mounted on automobile 250 has been established directly via matching server 400.

First, as shown in Fig. 28, mobile phone 100A transmits current location information representing the current location of mobile phone 100 to mobile phone 100B via Internet network 500. Mobile phone 100B transmits the current location information from mobile phone 100A and current location information representing its current location to car navigation device 200 via Internet network 500. Car navigation device 200 transmits the current location information from mobile phone 100B and current location information representing its current location to mobile phone 100A via Internet network 500.

After this, mobile phone 100A regularly transmits the current location information from car navigation device 200 and the current location information representing its current location to mobile phone 100B via Internet network 500. Likewise, mobile phone 100B regularly transmits the current location information from mobile phone 100A and the current location information representing its current location to car navigation device 200 via Internet network 500. Likewise, car navigation device 200 regularly transmits the current location information from mobile phone 100B and the current location information representing its current location to mobile phone 100A via Internet network 500.

Namely, in network system 1 of the present embodiment, each mobile communication terminal regularly transmits, to one of other mobile communication terminals with respective IPs having been registered at matching server 400 (stored in its fifth file 103-15), its current location information and the current location information of the other mobile communication terminals with respective IPs having been registered at matching server 400. Each mobile communication terminal selects another mobile communication terminal to which the current location information of that each mobile communication terminal is to be transmitted, so that the current location information of that each mobile communication terminal is transmitted to all other mobile communication terminals stored in fifth file 103-15 of storage unit 103-1 in that each mobile communication terminal.

For example, each mobile communication terminal transmits, to another mobile communication terminal with its IP registered at matching server 400 subsequent to that each mobile communication terminal, information about respective current locations of mobile communication terminals stored by that each mobile communication terminal. In other words, each mobile communication terminal transmits its storing information about respective current locations of mobile communication terminals, to another mobile communication terminal with the IP registration time (log-in time) that immediately follows the IP registration time of that each mobile communication terminal.

For example, each mobile communication terminal transmits its storing information about respective current locations of mobile communication terminals, to a mobile communication terminal which is one of other mobile communication terminals with respective IPs having been registered at matching server 400 and has the IP address which is large next to the IP address of that each mobile communication terminal.

As to the destination information as well, each mobile communication terminal may transmit the destination information in turn to another mobile communication terminal. Namely, for transmission of the destination information, the bucket-brigade type can also be applied to network system 1.

### <Map Display Processing in Mobile Phone 100>

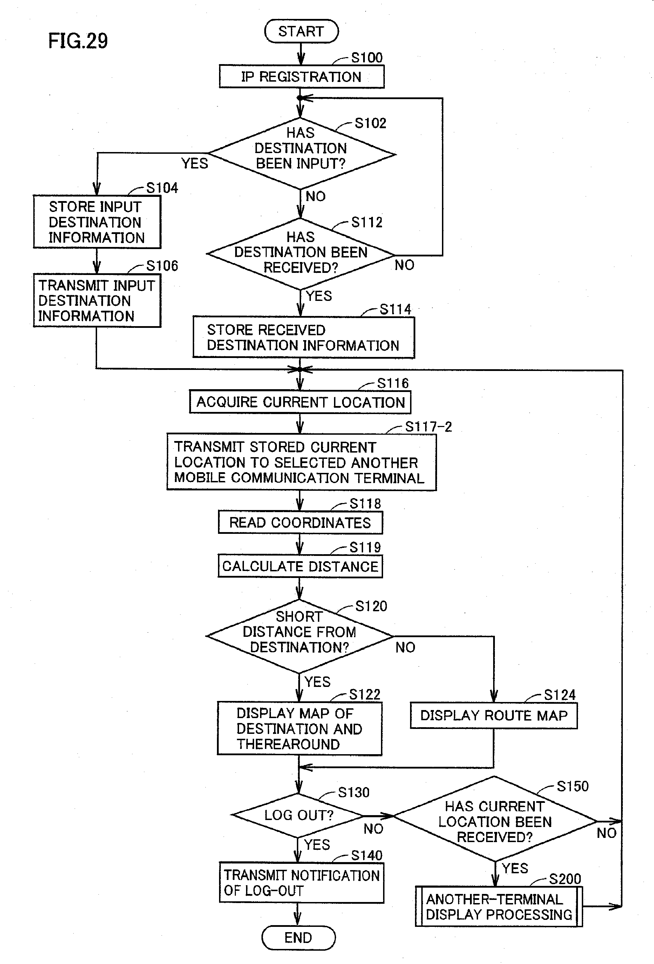

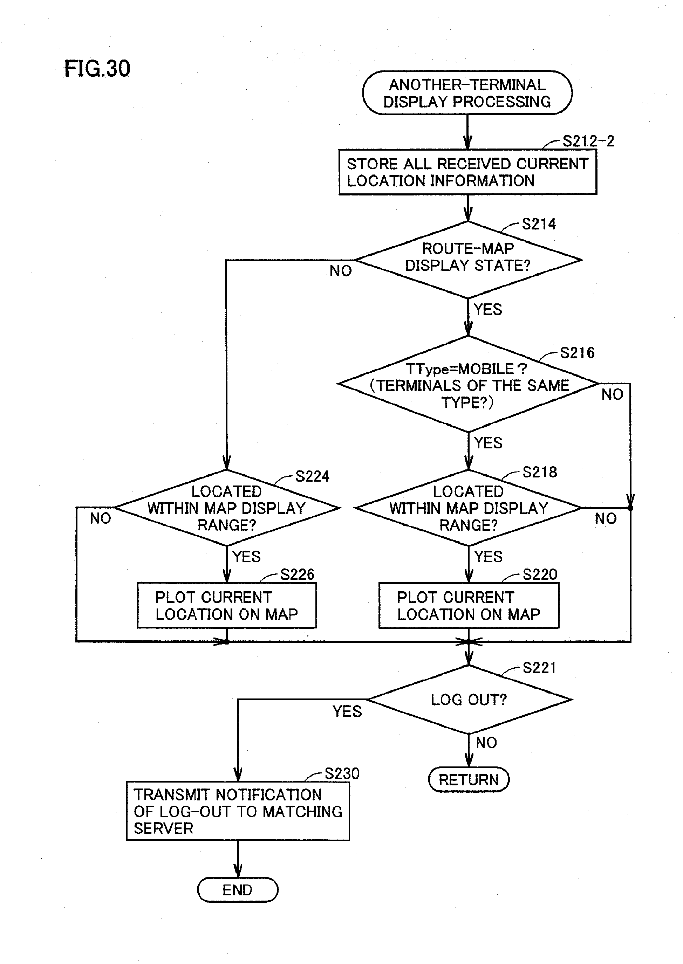

Next, map display processing in mobile phone 100 of the present embodiment will be described. Fig. 29 is a flowchart showing a procedure followed by mobile phone 100 in the present embodiment for current location display processing of displaying its current location. Fig. 30 is a flowchart showing a procedure followed by mobile phone 100 in the present embodiment for current location display processing of displaying the current location of another terminal.

As shown in Figs. 29 and 30, the processing in the present embodiment differs from that shown in Figs. 16 and 19 in terms of steps S117, S212, and S222. Specifically, mobile phone 100 executes the processing from steps S100 to S116, and thereafter transmission and reception unit 101-1 transmits, based on the IP address received from matching server 400, the current location information of mobile phone 100 and the current location information of another or other mobile communication terminals stored in storage unit 103-1, to one of other mobile communication terminals (step S117-2).

Then, mobile phone 100 executes the processing from steps S118 to S200. When the current location information is received from another mobile communication terminal (YES in step S200), control unit 106-1 stores (updates), in storage unit 103-1, the current location information of at least one another mobile communication terminal received from that another communication terminal (step S212-2).

After this, mobile phone 100 executes the processing from steps S214 to S221. When operation unit 110 has not accepted the log-out instruction to matching server 400 (NO in step S221), control unit 106-1 executes the processing from step S116. Namely, in the present embodiment, the processing in step S222 is not executed.

### <Map Display Processing in Car Navigation Device 200>

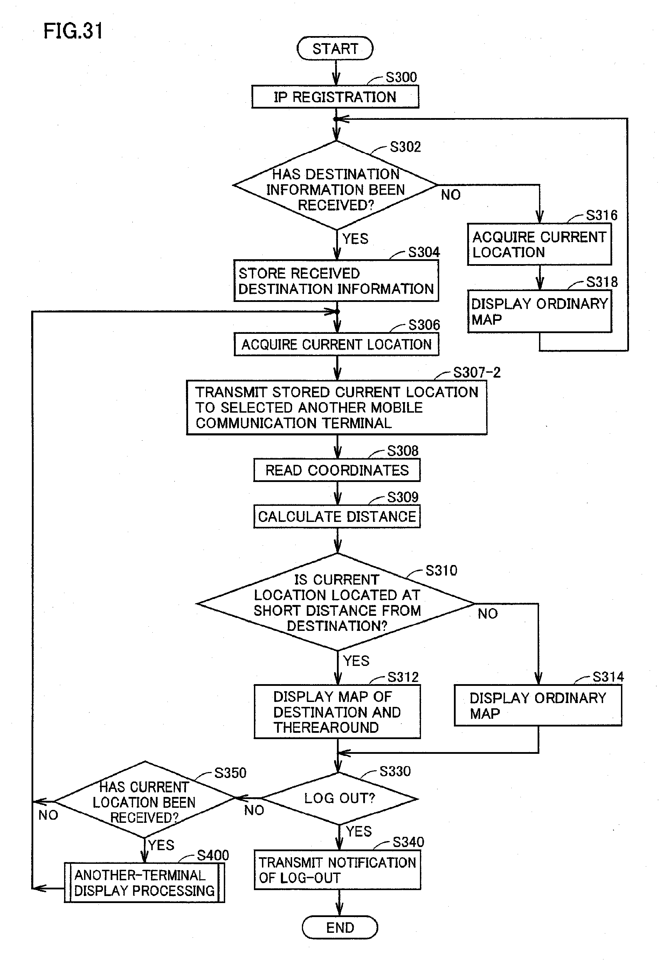

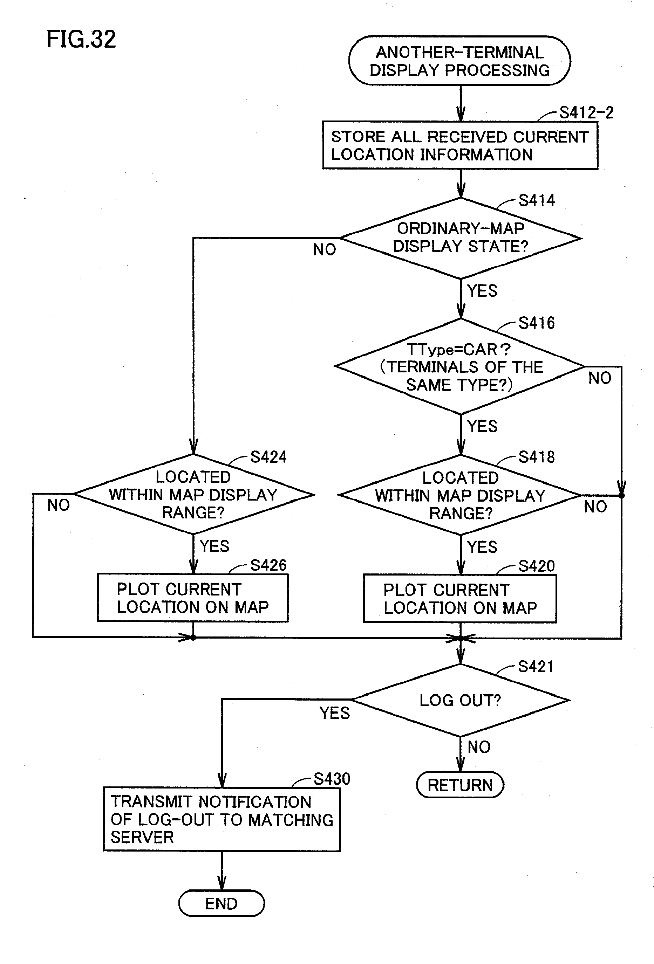

Next, map display processing in car navigation device 200 of the present embodiment will be described. Fig. 31 is a flowchart showing a procedure followed by car navigation device 200 in the present embodiment for current location display processing of displaying its current location. Fig. 32 is a flowchart showing a procedure followed by car navigation device 200 in the present embodiment for current location display processing of displaying the current location of another terminal.

In the following, a description will be given of a case where destination information is not input to car navigation device 200 (car navigation device 200 receives the destination information from another mobile communication terminal). The procedure of map display processing in PND 300 is similar to that of car navigation device 200, and thus the description thereof will not be repeated.

As shown in Figs. 31 and 32, the processing in the present embodiment differs from that shown in Figs. 22 and 25 in terms of steps S307, S412, and S422. Specifically, car navigation device 200 executes the processing in steps S300 to S306, and thereafter transmission and reception unit 101-1 transmits, based on the IP address received from matching server 400, the current location information of car navigation device 200 and the current location information of another or other mobile communication terminals stored in storage unit 103-1, to one of other mobile communication terminals (step S307-2).

Then, car navigation device 200 executes the processing from steps S308 to S400. When the current location information is received from another mobile communication terminal (YES in step S400), control unit 106-1 stores (updates), in storage unit 103-1, the current location information of at least one another mobile communication terminal received from that another communication terminal (step S412-2).

After this, car navigation device 200 executes the processing from steps S414 to S421. When operation unit 110 has not accepted the log-out instruction to matching server 400 (NO in step S421), control unit 106-1 executes the processing from step S306. Namely, in the present embodiment, the processing in step S422 is not executed.

As seen from above, network system 1b in the present embodiment enables a user of a mobile communication terminal to easily know the location relationship between the location of the mobile communication terminal itself, the location of another mobile communication terminal, and the destination. Further, mobile communication terminals constituting network system 1b include various types of mobile communication terminals, and each mobile communication terminal can acquire the current location information of another mobile communication terminal of a type different from the former mobile communication terminal. Therefore, a user carrying mobile phone 100 for example can know not only the current location of a user carrying another mobile phone but also the current location of a user carrying car navigation device 200.

In addition, each mobile communication terminal changes the type and the scale of a map to be displayed, depending on the distance between the current location of the mobile communication terminal and the destination, the type of the mobile communication terminal, and the type of another mobile communication terminal, for example. Therefore, the limited space of the display unit can effectively be used to more appropriately display information about respective locations of mobile communication terminals.

Further, in network system 1b of the present embodiment, the destination to which the current location information of each mobile communication terminal is transmitted is limited to one of other mobile communication terminals, and therefore, the amount of data transmitted by each mobile communication terminal can be reduced.

It should be immediately apparent that the present invention is also applicable to the case where a program is provided to a system or apparatus to achieve the present invention. A recording medium storing a program represented by software for achieving the present invention may be provided to a system or apparatus and a computer (or CPU or MPU) of the system or apparatus may read and execute a program code stored by the storage medium, which can also provide the effects of the present invention.

In this case, the program code itself read from the storage medium implements the functions of the embodiments as described above, and accordingly, the storage medium storing the program code constitutes the present invention.

As the storage medium for providing the program code, hard disk, optical disk, magneto-optical disk, CD-ROM, CD-R, magnetic tape, non-volatile memory card (IC memory card), ROM (mask ROM, flash EEPROM or the like), or the like may be used.

The functions of the embodiments as described above may also be implemented, not only by execution of the program code read by the computer, but also by actual processing partially or entirely executed by an OS (Operating System) operating on the computer based on instructions of the program code, which should also be immediately apparent.

Further, the program code read from the storage medium may be written to a memory of a feature expansion board inserted to a computer or a feature expansion unit connected to a computer, and thereafter a CPU or the like of the feature expansion board or feature expansion unit may perform a part or the whole of the actual processing based on instructions of the program code, so that the processing implements the functions of the embodiments as described above, which should also be immediately apparent.

It should be construed that embodiments disclosed herein are by way of illustration in all respects, not by way of limitation. It is intended that the scope of the present invention is defined by claims, not by the above description of the embodiments, and includes all modifications and variations equivalent in meaning and scope to the claims.

## Claims

1. A network system comprising at least first and second mobile communication terminals (100, 200) connectable to each other via a network (500),
said first mobile communication terminal including:
a first location information acquisition unit (102-1) acquiring first current location information representing a current location of said first mobile communication terminal;
a first storage unit (103-1) storing in advance second identification information for identifying said second mobile communication terminal;
a first operation unit (110) accepting input of destination information representing a destination; and
a first transmission and reception unit (101-1) transmitting said first current location information and said destination information via said network to said second mobile communication terminal, based on said second identification information, and
said second mobile communication terminal including:
a second location information acquisition unit acquiring second current location information representing a current location of said second mobile communication terminal;
a second display unit (107-1);
a second storage unit storing map information in advance; and
a second control unit (106-1) causing, based on said first current location information, said second current location information, and said destination information and with reference to said map information, said second display unit to display respective current locations of said first and second mobile communication terminals and said destination simultaneously on a map.

2. The network system according to claim 1, wherein
said second storage unit further stores in advance first identification information for identifying said first mobile communication terminal,
said second mobile communication terminal further includes a second transmission and reception unit transmitting said second current location information via said network to said first mobile communication terminal, based on said first identification information,
said first storage unit further stores map information in advance, and
said first mobile communication terminal further includes:
a first display unit; and
a first control unit causing, based on said first current location information, said second current location information, and said destination information and with reference to said map information, said first display unit to display respective current locations of said first and second mobile communication terminals and said destination simultaneously on a map.

3. The network system according to claim 2, wherein
said first transmission and reception unit transmits information about an image displayed by said first display unit to said second mobile communication terminal, and
said second display unit displays said image based on said information about said image that is transmitted from said first mobile communication terminal.

4. The network system according to claim 2, wherein
said first mobile communication terminal further includes a first touch panel (210) including said first display unit and said first operation unit,
said first transmission and reception unit transmits information about an image input via said touch panel to said second mobile communication terminal, and
said second display unit displays said image based on said information about said image input via said touch panel that is transmitted from said first mobile communication terminal.

5. The network system according to claim 1, further comprising a third mobile communication terminal (300), said third mobile communication terminal and said first mobile communication terminal being connectable to each other via the network, wherein
said first storage unit further stores in advance third identification information for identifying said third mobile communication terminal,
said first transmission and reception unit further transmits said first current location information and said destination information via said network to said third mobile communication terminal, based on said third identification information,
said third mobile communication terminal includes:
a third location information acquisition unit acquiring third current location information representing a current location of said third mobile communication terminal;
a third display unit;
a third storage unit storing map information in advance; and
a third control unit causing, based on said first current location information, said second current location information, said third current location information, and said destination information and with reference to said map information, said third display unit to display respective current locations of said first to third mobile communication terminals and said destination simultaneously on a map.

6. The network system according to claim 1, further comprising a third mobile communication terminal, said third mobile communication terminal and said first and second mobile communication terminals being connectable to each other via the network, wherein
said second storage unit stores in advance third identification information for identifying said third mobile communication terminal,
said second mobile communication terminal further includes a second transmission and reception unit transmitting said first current location information, said second current location information, and said destination information via said network to said third mobile communication terminal, based on said third identification information,
said third mobile communication terminal includes:
a third location information acquisition unit acquiring third current location information representing a current location of said third mobile communication terminal;
a third display unit;
a third storage unit storing in advance map information and first identification information for identifying said first mobile communication terminal;
a third control unit causing, based on said first current location information, said second current location information, said third current location information, and said destination information and with reference to said map information, said third display unit to display respective current locations of said first to third mobile communication terminals and said destination simultaneously on a map; and
a third transmission and reception unit transmitting said second current location information and said third current location information via said network to said first mobile communication terminal, based on said first identification information,
said first storage unit further stores map information in advance,
said first transmission and reception unit further transmits said third current location information via said network to said second mobile communication terminal, based on said second identification information,
said second control unit further causes said second display unit to display the current location of said third mobile communication terminal, based on said third current location information, and
said first mobile communication terminal further includes:
a first display unit; and
a first control unit causing, based on said first current location information, said second current location information, said third current location information, and said destination information and with reference to said map information, said first display unit to display respective current locations of said first to third mobile communication terminals and the destination simultaneously on a map.

7. The network system according to claim 1, wherein
said second storage unit stores map information that can be displayed in a plurality of forms, and
said second control unit includes:
a calculation unit (106-2) calculating, based on said second current location information and said destination information, a distance from said current location to said destination;
a determination unit (106-3) determining a display form of map based on said distance; and
a display control unit (106-4) causing said second display unit to display the map in the display form determined by said determination unit and to display said respective current locations of the mobile communication terminals and said destination simultaneously on the map.

8. The network system according to claim 7, wherein
said current location information includes a type of a corresponding mobile communication terminal, and
said determination unit determines a display form of map, based on the type of the second mobile communication terminal and the type of the other mobile communication terminal.

9. The network system according to claim 1, wherein
said second storage unit stores map information that can be displayed in a plurality of forms,
said second control unit includes:
a calculation unit calculating, based on said first current location information, said second current location information, and said destination information, respective distances from respective current locations of said mobile communication terminals to said destination;
a determination unit determining a display form of map based on a largest distance among said distances; and
a display control unit causing said second display unit to display the map in the display form determined by said determination unit and to display respective current locations of the mobile communication terminals and said destination simultaneously on the map.

10. The network system according to claim 1, wherein
said destination information includes information about time for meeting, and said first operation unit accepts input further including information about time for meeting.

11. A mobile communication terminal connectable with at least one another mobile communication terminal each other via a network, comprising:
a display unit;
a location information acquisition unit acquiring first current location information representing a current location of said mobile communication terminal;
a storage unit storing in advance map information and identification information for identifying said another mobile communication terminal;
an operation unit accepting input of destination information representing a destination;
a transmission and reception unit transmitting said first current location information and said destination information via said network to said another mobile communication terminal, based on said identification information, and receiving second current location information representing a current location of said another mobile communication terminal from said another mobile communication terminal; and
a control unit causing, based on said first current location information, said second current location information, and said destination information and with reference to said map information, said display unit to display the current location of said mobile communication terminal, the current location of said another mobile communication terminal, and said destination simultaneously on a map.

12. The mobile communication terminal according to claim 11, wherein
said storage unit stores map information that can be displayed in a plurality of forms, and
said control unit includes:
a calculation unit calculating, based on said first current location information and said destination information, a distance from said current location to said destination;
a determination unit determining a display form of map based on said distance; and
a display control unit causing said display unit to display the map in the display form determined by said determination unit and to display respective current locations of said mobile communication terminals and said destination simultaneously on the map.

13. The mobile communication terminal according to claim 12, wherein
said first current location information includes a type of said mobile communication terminal,
said second current location information includes a type of said another mobile communication terminal, and
said determination unit determines a display form of map, based on the type of said mobile communication terminal and the type of said another mobile communication terminal.

14. The mobile communication terminal according to claim 11, wherein
said storage unit stores map information that can be displayed in a plurality of forms, and
said control unit includes:
a calculation unit calculating, based on said first current location information, said second current location information, and said destination information, respective distances from respective current locations of said mobile communication terminals to said destination;
a determination unit determining a display form of map based on a largest distance among said distances; and
a display control unit causing said display unit to display the map in the display form determined by said determination unit and to display respective current locations of said mobile communication terminals and said destination simultaneously on the map.

15. The mobile communication terminal according to claim 11, wherein
said transmission and reception unit transmits information about an image displayed by said display unit to said another mobile communication terminal, and
based on information about an image transmitted from said another mobile communication terminal, said display unit displays said image.

16. The mobile communication terminal according to claim 11, wherein
said destination information further includes information about time for meeting, and
said operation unit accepts input further including information about time for meeting.

17. A communication method for a mobile communication terminal connectable with at least one another mobile communication terminal each other via a network,
said mobile communication terminal including:
a display unit;
an operation unit;
a processor unit;
a location information acquisition unit acquiring first current location information representing a current location of said mobile communication terminal; and
a storage unit storing in advance map information and identification information for identifying said another mobile communication terminal,
said communication method comprising the steps of:
accepting input of destination information representing a destination;
transmitting said first current location information and said destination information via said network to said another mobile communication terminal, based on said identification information;
receiving from said another mobile communication terminal second current location information representing a current location of said another mobile communication terminal; and
causing, based on said first current location information, said second current location information, and said destination information and with reference to said map information, said display unit to display the current location of said mobile communication terminal, the current location of said another mobile communication terminal, and said destination simultaneously on a map.

18. The communication method according to claim 17, wherein
said storage unit stores map information that can be displayed in a plurality of forms, and
said step of causing said display unit to display said current locations and said destination includes the steps of:
calculating, based on said first current location information and said destination information, a distance from said current location to said destination;
determining a display form of map based on said distance; and
causing said display unit to display the map in the display form determined by said determination unit and to display respective current locations of said mobile communication terminals and said destination simultaneously on the map.

19. The mobile communication terminal according to claim 18, wherein
said first current location information includes a type of said mobile communication terminal,
said second current location information includes a type of said another mobile communication terminal, and
said step of determining includes the step of determining a display form of map based on the type of said mobile communication terminal and the type of said another mobile communication terminal.

20. The communication method according to claim 17, wherein
said storage unit stores map information that can be displayed in a plurality of forms, and
said step of causing said display unit to display said current locations and the destination includes the steps of:
calculating, based on said first current location information, said second current location information, and said destination information, respective distances from respective current locations of said mobile communication terminals to said destination;
determining a display form of map based on a largest distance among said distances; and
causing said display unit to display the map in the display form determined by said determination unit and to display respective current locations of said mobile communication terminals and said destination simultaneously on the map.
